# EUROPÄISCHE PATENTSCHRIFT

(11) **EP 1 163 453 B1**
(45) Veröffentlichungstag und Bekanntmachung des Hinweises auf die Patenterteilung: **29.10.2003**
(21) Anmeldenummer: 00910751.7
(22) Anmeldetag: 02.03.2000
(51) Int. Cl.: F15B 11/02, B66D 1/44

(54) **HYDRAULISCHE STEUERANORDNUNG ZUM BETREIBEN EINER WINDE IM FIEREN-, HIEVEN- UND MOORING-BETRIEB**
HYDRAULIC CONTROL ARRANGEMENT FOR OPERATING A WINCH WITH EASING, HOISTING AND MOORING MODES
DISPOSITIF DE COMMANDE HYDRAULIQUE PERMETTANT DE FAIRE FONCTIONNER UN TREUIL EN MODE DE DESCENTE, DE HISSAGE ET D'AMARRAGE

(30) Priorität: 24.03.1999 DE 19913275
(43) Veröffentlichungstag der Anmeldung: 19.12.2001
(73) Patentinhaber: Bosch Rexroth AG, 97816 Lohr am Main (DE)
(72) Erfinder: HABERMANN, Heinz, D-97816 Lohr/Main (DE); KASTEL, Wilhelm, D-25462 Rellingen (DE)
(86) Internationale Anmeldenummer: EP0001777
(87) Internationale Veröffentlichungsnummer: WO00057065

(56) Entgegenhaltungen:
- DE-A- 2 507 947
- US-A- 4 624 450

## Beschreibung

Die Erfindung geht aus von einer hydraulischen Steueranordnung, die zum Betreiben einer Winde in Fieren-, Hieven- und Mooring-Betrieb verwendet wird und die die Merkmale aus dem Oberbegriff des Patentanspruchs 1 aufweist.

Eine derartige hydraulische Steueranordnung ist aus dem Typenblatt RD 65 050/03.96 der Anmelderin oder z. B. aus der DE-A-25 07 947 bekannt. Bei einer solchen Steueranordnung wird die Winde vorzugsweise von einem verstellbaren Hydromotor angetrieben. Mit einem vorgesteuerten, proportional verstellbaren und in einer Mittelstellung federzentrierten Wegeventil werden die Strömungspfade eines Druckmittels zwischen einer Druckmittelquelle, dem Hydromotor und einem Druckmittelvorratsbehälter gesteuert. Zur Steuerung der Verstellung des Wegeventils und des Hydromotors dient ein Vorsteuergerät mit einem willkürlich betätigbaren Steuerhebel, der aus einer Neutralstellung zum unterschiedlich schnellen Fieren über einen bestimmten Fierenwinkelbereich in die eine Richtung und zum unterschiedlich schnellen Hieven über einen bestimmten Hievenwinkelbereich in die entgegengesetzte Richtung auslenkbar ist. In die Geschwindigkeitsänderung der Winde gehen dabei zwei Verstellungen ein. Zum einen wird bei einer Auslenkung des Steuerhebels das Wegeventil immer weiter geöffnet, so daß sich die dem Hydromotor zufließende Druckmittelmenge immer weiter erhöht. Zum anderen wird das Schluckvolumen des Hydromotors verkleinert. Es ist denkbar, den Öffnungsquerschnitt des Wegeventils und das Schluckvolumen des Hydromotors parallel zueinander zu verändern. Im Stand der Technik ist jedoch vorgesehen, daß bis zu einem Vorsteuerdruck von z.B. 18 bar nur das hydraulisch vorgesteuerte Wegeventil und im Bereich eines Vorsteuerdruckes von z.B. 20 bis 30 bar nur der verstellbare Hydromotor verstellt wird.

Im Mooring-Betrieb soll die Trosse unter einer vorgebbaren Spannung gehalten werden. Diese Spannung kann durch das Schluckvolumen des Hydromotors eingestellt werden. Im Stand der Technik wird der Steuerhebel des Vorsteuergeräts zum Hieven-Betrieb der Winde in die eine Richtung und zum Fieren-Betrieb der Winde in die andere Richtung gegen die Kraft einer Rückstellfeder aus einer Neutralstellung ausgelenkt. Für den Mooring-Betrieb, der meist über einen längeren Zeitraum aufrechterhalten werden soll, ohne daß der Steuerhebel von Hand in einer bestimmten Stellung gehalten wird, ist bei der bekannten hydraulischen Steueranordnung für den Steuerhebel eine Feststellbremse vorgesehen, die den Steuerhebel innerhalb des Hievenwinkelbereichs gegen die Kraft der Rückstellfeder in einer einem bestimmten Schluckvolumen des Hydromotors entsprechenden Position festhält.

Bei der bekannten hydraulischen Steueranordnung wird im Hieven-Betrieb die einzustellende Größe, nämlich die Geschwindigkeit der Trosse mit zunehmendem Auslenkwinkel des Steuerhebels größer. Im Mooring-Betrieb ist die einzustellende Größe das vom Hydromotor ausgeübte Drehmoment. Dieses wird mit zunehmendem Auslenkwinkel des Steuerhebels kleiner, ein Verhalten, das den üblichen Vorstellungen von der Einstellung einer Größe über einen Steuerhebel widerspricht und deshalb zu Fehleinstellungen führen kann. Nachteilig bei der bekannten hydraulischen Steuerung ist auch, daß sich Hieven-Betrieb und Mooring-Betrieb nicht anhand der Stellung des Steuerhebels unterscheiden lassen.

Der Erfindung liegt die Aufgabe zugrunde, eine hydraulische Steueranordnung, die die Merkmale aus dem Oberbegriff des Patentanspruchs 1 aufweist, so auszubilden, daß eine der üblichen Vorstellung entsprechende Art des Mooring-Betriebs möglich ist.

Das angestrebte Ziel wird bei einer gattungsgemäßen hydraulischen Steueranordnung gemäß der Erfindung dadurch erreicht, daß nach dem kennzeichnenden Teil des Patentanspruchs 1 der Steuerhebel, von der Neutralstellung aus gesehen, jenseits des Hievenwinkelbereichs über einen Mooringwinkelbereich auslenkbar ist und daß mit zunehmender Auslenkung des Steuerhebels im Mooringwinkelbereich der Hydromotor in Richtung größeres Schluckvolumen verstellt wird. Damit nimmt mit zunehmender Auslenkung des Steuerhebels das vom Hydromotor ausübbare Drehmoment zu, was der üblichen Vorstellung von einer Steuerung entspricht und die Wahrscheinlichkeit einer Fehlsteuerung verringert. Außerdem sind nun der Winkelbereich, in dem sich der Steuerhebel zum Hieven befindet, und der Winkelbereich für den Mooring-Betrieb voneinander getrennt, so daß schon aus der Stellung des Steuerhebels ein Hinweis auf eine unterschiedliche Betriebsweise entnommen werden kann.

Vorteilhafte Ausgestaltungen einer erfindungsgemäßen Steueranordnung kann man den Unteransprüchen entnehmen.

So ist bevorzugt gemäß Patentanspruch 2 bei einer Verstellung des Steuerhebels vom Hievenwinkelbereich in den Mooringwinkelbereich ein deutlicher Drehmomentanstieg spürbar, so daß die Bedienungsperson deutlich darauf hingewiesen wird, daß sie mit dem Steuerhebel den Hievenwinkelbereich verläßt und in den Mooringwinkelbereich gelangt.

Wie schon geschildert, wird eine Winde oft über einen längeren Zeitraum, z.B. über den Zeitraum, währenddessen ein Schiff in einem Hafen liegt, im Mooring betrieben. Damit nicht während dieser ganzen Zeit eine Person den Steuerhebel festhalten muß, ist wie bei der bekannten hydraulischen Steueranordnung zweckmäßigerweise auch bei einer erfindungsgemäßen Steueranordnung vorgesehen, daß der Steuerhebel für den Mooring-Betrieb in eine Stellung gebracht werden kann, aus der er nicht selbsttätig in die Neutralstellung zurückkehrt. Die Möglichkeit, den Steuerhebel in einer bestimmten Position zu belassen, verführt dazu, eine Winde vorschriftswidrig zu betreiben. Es kann nämlich eine Person den Mooring-Betrieb dazu benutzen, um die Trosse einzuholen, indem die Person den Steuerhebel zunächst in eine bestimmte Position im Mooringwinkelbereich bringt und sich dann an der Trosse oder an der Last zu schaffen macht. Es ist deshalb günstig, wenn im Mooring-Betrieb die Geschwindigkeit, mit der die Trosse eingeholt werden kann, auf einen kleinen Wert begrenzt ist. Gemäß Patentanspruch 3 ist eine erfindungsgemäße hydraulische Steueranordnung für eine derartige Geschwindigkeitsbegrenzung mit einer Düse und einem zweiten Wegeventil ausgestattet, wobei dieses zweite Wegeventil beim Übergang des Steuerhebels vom Hievenwinkelbereich zum Mooringwinkelbereich in eine Mooringstellung umschaltbar ist, in der die Düse im Sinne einer Begrenzung der Drehzahl des Hydromotor auf kleine Werte im über den Hydromotor führenden Strömungspfad des Druckmittels liegt. Eine solche Begrenzung der Drehzahl des Hydromotors ist vor allem für die Drehrichtung vorteilhaft, in der die Trosse aufgewickelt wird. Reißt z.B. im Mooring-Betrieb eine Trosse, so geschieht das Aufwickeln nur mit der begrenzten Geschwindigkeit, so daß das lose Seil nicht wild in der Gegend herumschlägt und Personen gefährdet. Auch ist die Geschwindigkeit der Trosse beim vorschriftswidrigen Betrieb der Winde, in dem im Mooring-Betrieb eine Last bewegt wird, die Geschwindigkeit nur klein und somit die Gefährdung von Personen gering.

Gemäß Patentanspruch 4 sind die Düse und das zweite Wegeventil bevorzugt in Serie zueinander und in einer Bypassleitung zum ersten Wegeventil angeordnet, wobei das erste Wegeventil beim Übergang des Steuerhebels vom Hievenwinkelbereich zum Mooringwinkelbereich in eine Mittelstellung gebracht wird, in der der Zulauf von Druckmittel zum Hydromotor unter Druck über das erste Wegeventil gesperrt ist. An sich ist es auch denkbar, die Parallelschaltung einer Düse und des zweiten Wegeventils in Serie zum ersten Wegeventil anzuordnen. Das zweite Wegeventil wäre dann im Hieven-Betrieb ganz offen und im Mooring-Betrieb geschlossen. Es müßte allerdings auf die maximal dem Hydromotor zufließende Druckmittelmenge ausgelegt und dementsprechend groß dimensioniert sein. Demgegenüber kann bei einer Ausbildung gemäß Patentanspruch 4 das zweite Wegeventil verhältnismäßig klein bauen.

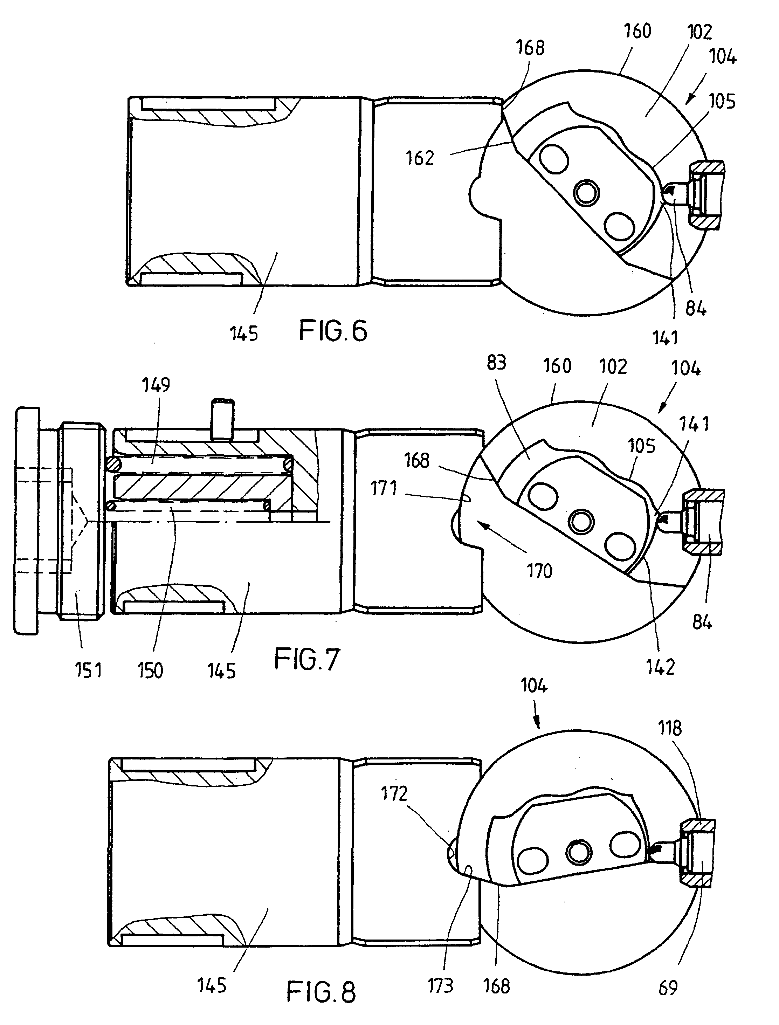

Gemäß Figur 5 ist das Vorsteuergerät ein hydraulisches Vorsteuergerät und das erste Wegeventil hydraulisch betätigbar. Es wird bei einer Verstellung des Steuerhebels in den Mooringwinkelbereich dadurch in seine Mittelstellung gebracht, daß beide Vorsteuerkammern mit dem gleichen, auch am Hydromotor anstehenden Vorsteuerdruck beaufschlagt werden. Dies vereinfacht die Steueranordnung gegenüber einer anderen Lösung, bei der zur Rückstellung des ersten Wegeventils in die Mittelstellung dessen beiden Vorsteuerkammern von Druck entlastet werden. Üblicherweise liegen nämlich die beiden vom Vorsteuergerät zum ersten Wegeventil führenden Steuerleitungen auch an den beiden Eingängen eines Wechselventils, von dessen Ausgang eine Steuerleitung zur Verstelleinrichtung des Hydromotors abgeht. Über das Wechselventil wird ein in der einen Vorsteuerkammer oder in der anderen Vorsteuerkammer des ersten Wegeventils anstehender Vorsteuerdruck auf die Verstelleinrichtung des Hydromotors gegeben. Wollte man nun die beiden Vorsteuerkammern des Wegeventils zum Tank entlasten, so müßte durch das zweite Wegeventil der eine Eingang des Wechselventils, an den im Hieven-Betrieb ein Vorsteuerdruck für den Hydromotor ansteht, von der entsprechenden Vorsteuerkammer des Wegeventils getrennt und die Vorsteuerkammer separat zum Tank entlastet werden können. Dies würde einen Tankanschluß am Wegeventil und einen Tankkanal notwendig machen. Besonders vorteilhaft ist dabei die Ausbildung gemäß Patentanspruch 5, wenn gemäß Patentanspruch 6 das Vorsteuergerät ein verstellbares Pilotventil mit einem Vorsteuerdruckanschluß umfaßt, der über ein durch die Auslenkung des Steuerhebels betätigtes Wegeventil mit den verschiedenen Vorsteuerkammern des ersten Wegeventils verbindbar ist. Ein Vorsteuergerät mit einem Pilotventil, dessen Vorsteuerdruckanschluß über ein Wegeventil mit der einen oder der anderen Vorsteuerkammer eines proportional verstellbaren Wegeventils verbindbar ist, bringt den Vorteil mit sich, daß das Verhalten der Vorsteuerung unabhängig davon, in welche Richtung der Steuerhebel aus seiner Neutralstellung ausgelenkt wird, durch Toleranzen im Pilotventil nicht in unterschiedlicher Weise beeinflußt wird. Wird also z.B. das Pilotventil bei einer Auslenkung des Steuerhebels aus der Neutralstellung unabhängig von der Richtung in Abhängigkeit vom Winkel jeweils in gleicher Weise betätigt, so sind auch bei gleichem Auslenkwinkel die Vorsteuerdrücke gleich. Bei einer Einstellung des Pilotventils werden die Vorsteuerdrücke in beide Auslenkrichtungen in gleicher Weise beeinflußt.

Für eine lastunabhängige Steuerung der Drehzahl einer Winde ist einer Zumeßblende des proportional verstellbaren Wegeventils eine Druckwaage zugeordnet, die eine feste Druckdifferenz über die Zumeßblende aufrechterhält. Die Bypassleitung umgeht nun vorteilhafterweise sowohl die Druckwaage als auch das Wegeventil. Dann kann die eine Steuerseite der Druckwaage auf einfache Weise mit einem Anschluß des Wegeventils verbunden werden, über den eine Bremse der Winde mit Druck beaufschlagbar ist und der in der Mittelstellung des Wegeventils von Druck entlastet ist, damit die Bremse greifen kann. Es ist jedoch auch denkbar, die eine Steuerseite der Druckwaage über ein Wechselventil mit dem einen oder dem anderen Anschluß des Hydromotors zu verbinden und die Bypassleitung stromab der Druckwaage abzweigen zu lassen, so daß nur das Wegeventil umgangen wird. Druckwaage und Düse in der Bypassleitung bilden dann zusammen ein Stromregelventil, so daß man im Mooring-Betrieb eine Stromregelung für das von der Druckmittelquelle zum Hydromotor strömende Druckmittel hat.

In der Bypassleitung befindet sich gemäß Patentanspruch 8 vorteilhafterweise ein Rückschlagventil, das in Richtung Zufluß von Druckmittel von der Druckmittelquelle zum Hydromotor öffnet. Außerdem ist ein Druckbegrenzungsventil vorhanden, das zwischen den beiden Anschlüssen des Hydromotors angeordnet ist und durch das der Druck am im Mooring-Betrieb mit Druck beaufschlagten Anschluß des Hydromotors auf einen Maximalwert begrenzt ist. Beim Nachlassen vom Seil im Mooring-Betrieb fließt Druckmittel vom druckbeaufschlagten Anschluß des Hydromotors auf kurzem Wege über das Druckbegrenzungsventil zum anderen Anschluß. Der Hydromotor muß keine große Druckmittelmenge über lange Leitungen nachsaugen, was mit der Gefahr von Kaviatation verbunden wäre. Erfolgt die Steuerdruckversorgung intern über ein Druckreduzierventil, so wird dies mit seinem Druckanschluß an die Bypassleitung, und zwar stromauf der Düse, angeschlossen, wobei gemäß Patentanspruch 9 das Rückschlagventil zwischen dem Druckanschluß und der Druckmittelquelle angeordnet ist.

Bei der bekannten hydraulischen Steueranordnung für eine Winde wird eine hydraulisch lüftbare mechanische Bremse über ein Wechselventil von den beiden Motorventilanschlüssen des proportional verstellbaren Wegeventils aus mit Druckmittel versorgt. In der Mittelstellung des Wegeventils sind beide Motorventilanschlüsse des Wegeventils und damit auch die Bremse zum Tank entlastet, so daß die Bremse greifen kann. Nach der Ausbildung gemäß Patentanspruch 4 befindet sich das proportional verstellbare Wegeventil im Mooring-Betrieb in seiner Mittelstellung, wobei eine Druckmittelversorgung des Hydromotors über die Bypassleitung möglich sein soll und deshalb der eine Motorventilanschluß des Proportional-Wegeventils in dessen Mittelstellung vorteilhafterweise nicht zum Tank entlastet ist, um nicht ein weiteres Ventil zwischen diesem Motorventilanschluß und dem Abzweigpunkt der Bypassleitung zu benötigen. Gemäß Patentanspruch 10 wird deshalb die Bremse im Mooring-Betrieb vorteilhafterweise über das zweite Wegeventil mit Druckmittel versorgt und ist auch über das zweite Wegeventil von Druck entlastbar, wenn der Steuerhebel in seine Neutralstellung gestellt wird. Wesentlich ist hier also, daß der hydraulische Betätiger der Bremse in der Mittelstellung des Proportional-Wegeventils unabhängig von diesem mit Druck beaufschlagbar und von Druck entlastbar ist.

Wie beim Stand der Technik ist gemäß Patentanspruch 12 eine Rückstellvorrichtung für den Steuerhebel vorhanden, die eine Rückstellfeder umfaßt, die im Fieren- und im Hievenwinkelbereich mit zunehmender Auslenkung des Steuerhebels stärker vorgespannt wird, so daß in den genannten Winkelbereichen eine Rückstellkraft auf den Steuerhebel ausgeübt wird. Eine Verstellung des Steuerhebels im Mooring-Winkelbereich dagegen ist indifferent im Hinblick auf die Vorspannung der Rückstellfeder. Somit übt diese im Mooring-Winkelbereich auch keine Rückstellkraft auf den Steuerhebel aus. Es erübrigt sich deshalb eine gesonderte Feststellbremse für den Steuerhebel. Vorteilhafte, sich auf das Vorhandensein und Nichtvorhandensein einer Rückstellkraft beziehende Ausgestaltungen der Rückstellvorrichtung und einer mit dem Steuerhebel verdrehsicher gekoppelten und mit der Rückstellvorrichtung zusammenwirkenden Kurvenscheibe kann man den Unteransprüchen 13 bis 23 entnehmen. Besonders hingewiesen sei dabei auf die Ausgestaltung gemäß Patentanspruch 17, wonach ein Druckstück der Rückstellvorrichtung im Mooringwinkelbereich zusätzlich zur Rückstellfeder von einer zweiten Feder gegen die Kurvenscheibe gedrückt wird. Damit wird die Reibkraft zwischen dem Druckstück und der Kurvenscheibe erhöht, so daß ein von einem Pilotventil auf den Steuerhebel ausgeübtes, kleines Drehmoment sicher nicht zu einer Verstellung des Steuerhebels führt.

Die erfindungsgemäße hydraulische Steueranordnung wird dazu verwendet, um eine Winde im Fieren-, im Hieven- und im Mooring-Betrieb zu betreiben. Für manche Winden ist jedoch kein Mooring-Betrieb vorgesehen. Um hier im Vorsteuergerät dieselben Bauteile wie für eine Winde mit Mooring-Betrieb verwenden zu können, ist in der Weiterbildung einer erfindungsgemäßen hydraulischen Steueranordnung gemäß Patentanspruch 20 vorgesehen, daß die Auslenkung des Steuerhebels am Ende des Fierenwinkelbereichs und am Ende des Mooringwinkelbereichs jeweils durch eine Anschlagfläche an einem mit dem Steuerhebel mitgedrehten Teil und einen Gegenanschlag begrenzt ist und daß das Druckstück einen zusätzlichen Anschlag autweist, der in Abhängigkeit von der Art des Einbaus des Druckstücks und/oder eines Gegenanschlags den Weg des Druckstücks in Richtung stärkerer Vorspannung der Rückstellfeder am Ende des Hievenwinkelbereichs begrenzt (Winde ohne Mooring-Betrieb) oder nicht begrenzt (Winde mit Mooring-Betrieb).

Weitere vorteilhafte Ausgestaltungen einer erfindungsgemäßen hydraulischen Steueranordnung ergeben sich aus der nun folgenden Beschreibung eines Ausführungsbeispiels, das in der Zeichnung dargestellt ist. Dabei zeigen:
- Figur 1: das Ausführungsbeispiel in einem Schaltbild, in das schematisch auch der Steuerhebel und die Winkelbereiche, in denen sich der Steuerhebel während der verschiedenen Betriebsarten befindet, dargestellt sind,
- Figur 2: einen Teilschnitt durch ein Vorsteuergerät senkrecht zur Achse des Steuerhebels, wobei die Schnittebene für die Rückstellvorrichtung und das Gehäuse eine andere als diejenige für das Vorsteuerventil ist,
- Figur 3: die mit dem Steuerhebel verdrehbare Welle mit Kurvenbahnen, das Druckstück der Rückstellvorrichtung und ein Stößel des Vorsteuerventils in einer Position, die die Teile bei in Richtung Fieren maximal ausgelenktem Steuerhebel einnehmen,
- Figur 4: dieselben Teile wie in Figur 3 in einer Position, in der der Steuerhebel um 15 Grad aus seiner Neutralstellung in den Hievenwinkelbereich hinein ausgelenkt ist,
- Figur 5: dieselben Teile wie in Figur 4 nach einer Auslenkung des Steuerhebels um 25 Grad,
- Figur 6: die Teile aus Figur 5 nach einer Auslenkung des Steuerhebels um 45 Grad bis zum Ende des Hievenwinkelbereichs,
- Figur 7: die Teile aus Figur 6 nach einer Auslenkung des Steuerhebels um 57 Grad bis zum Beginn des Mooringwinkelbereichs und
- Figur 8: die Teile aus Figur 7 nach einer Verschwenkung des Steuerhebels um 100 Grad bis zum Ende des Mooringwinkelbereichs.

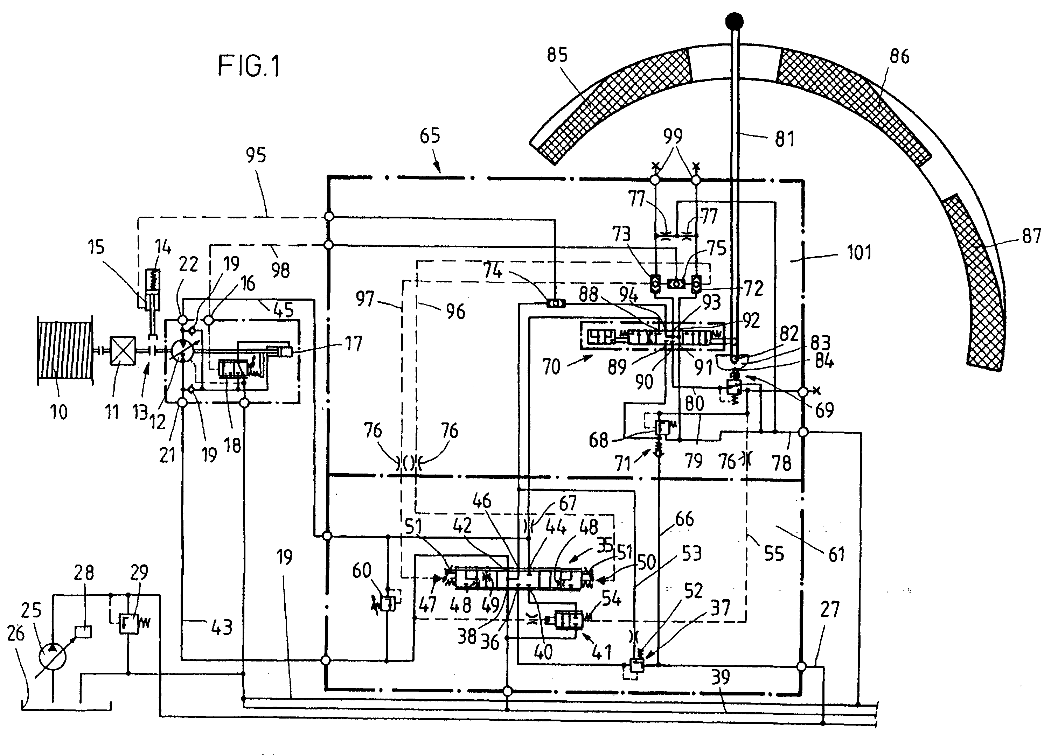

In Figur 1 ist eine Winde 10 erkennbar, die über ein Getriebe 11 von einem verstellbaren Hydromotor 12 nach entgegengesetzten Richtungen antreibbar ist. Zwischen der Abtriebswelle des Hydromotors und dem Getriebe ist eine Bremse 13 angeordnet, die über einen einfachwirkenden Hydrozylinder 14 betätigbar ist. Der Hydrozylinder 14 ist nach Art eines Differentialzylinders aufgebaut, dessen Kolben und Kolbenstange von einer Feder im Sinne eines Eingriffs der Bremse verschiebbar sind. Durch Beaufschlagung des Ringraumes 15 des Hydrozylinders 14 mit Druckmittel werden Kolben und Kolbenstange entgegen der Kraft der Feder zurückbewegt und dadurch die Bremse 13 gelüftet. Das Schluckvolumen des Hydromotors 12 läßt sich in Abhängigkeit von einem am Steuereingang 16 aufgebrachten Steuerdruck stufenlos verstellen und ist um so kleiner, je größer der Steuerdruck ist. Für die Verstellung sind ein als Differentialzylinder ausgebildeter Stellzylinder 17 und ein Pumpenregelventil 18 vorhanden. Dieses besitzt einen Tankanschluß, der mit einer Leckölleitung 19 verbunden ist, einen Druckanschluß, der über zwei Rückschlagventile 20 mit jeweils dem Motoranschluß 21 oder 22 verbunden ist, und einen mit dem kolbenstangenabseitigen Druckraum des Stellzylinders 17 verbundenen Zylinderanschluß. Der kolbenstangenseitige Druckraum des Stellzylinders 17 ist mit dem Druckanschluß des Pumpenregelventils 18 verbunden. Der Kolbenschieber des Pumpenregelventils 18 wird im Sinne einer Verbindung des Zylinderanschlusses mit dem Druckanschluß vom Steuerdruck und im Sinne einer Verbindung des Zylinderanschlusses mit dem Tankanschluß von einer ersten, auf einen festen Wert eingestellten Druckfeder und von einer zweiten Druckfeder beaufschlagt, deren Vorspannung sich mit der Position des Kolbens und der Kolbenstange des Stellzylinders 17 ändert. Kolben und Kolbenstange des Stellzylinders 17 nehmen also jeweils eine solche Position ein, daß die durch den aufgebrachten Steuerdruck erzeugte Kraft und die von den Federn erzeugte Kraft sich am Kolben des Pumpenregelventils 18 das Gleichgewicht halten. Auf diese Weise läßt sich durch den Steuerdruck ein bestimmtes Schluckvolumen des Hydromotors 12 einstellen.

Quelle für das Druckmittel, das dem Hydromotor 12 zugeführt wird, ist eine Verstellpumpe 25, die Hydrauliköl aus einem Tank 26 ansaugt und in eine Zulaufleitung 27 abgibt. Die Verstellpumpe 25 ist mit einem Druckregler 28 versehen, schwenkt also, wenn in der Zulaufleitung 27 der am Druckregler 28 eingestellte Druck erreicht wird, auf ein Hubvolumen zurück, das ausreicht, um den eingestellten Druck in der Zulaufleitung 27 aufrechtzuerhalten. Zur Absicherung der gesamten Steueranordnung gegen zu hohe Drücke ist ein Druckbegrenzungsventil 29 an die Zulaufleitung 27 angeschlossen. Das maximale Hubvolumen der Verstellpumpe ist so ausgelegt, daß diese noch nicht bis auf Anschlag ausgeschwenkt ist, wenn auch unter Berücksichtigung einer gleichzeitigen Betätigung mehrerer hydraulischer Verbraucher maximale Druckmittelmenge angefordert wird.

Die Drehzahl, mit der sich der Hydromotor 12 dreht, und die Drehrichtung sind mit einem proportional verstellbaren Wegeventil 35 steuerbar. Dieses ist in einer Mittelstellung federzentriert und kann hydraulisch betätigt werden. Es besitzt insgesamt sechs Anschlüsse, nämlich einen Zulaufanschluß 36, dem Druckmittel aus der Zulaufleitung 27 über eine Druckwaage 37 zufließen kann, einen Ablaufanschluß 38, der direkt mit einer Tankleitung 39 verbunden ist, einen zweiten Ablaufanschluß 40, der über ein Bremsventil 41 mit der Tankleitung 39 verbunden ist, einen ersten Verbraucheranschluß 42, der über eine Verbraucherleitung 43 mit dem Motoranschluß 21 verbunden ist, einen zweiten Verbraucheranschluß 44, der über eine Verbraucherleitung 45 mit dem Motoranschluß 22 verbunden ist und einen Bremsenanschluß 46, über den der Ringraum 15 des Hydrozylinders 14 mit Druckmittel beaufschlagbar ist.

In der federzentrierten Mittelstellung des Wegeventils 35 sind dessen Anschlüsse 36, 40 und 44 abgesperrt. Die Anschlüsse 42 und 46 sind mit dem Anschluß 38 und damit mit dem Tank 26 verbunden. Durch Beaufschlagung einer ersten Steuerkammer 47 mit einem Steuerdruck wird der Ventilkolben des Wegeventils 35 je nach Höhe des Steuerdrucks verschieden weit in eine erste Arbeitsstellung verschoben, in der der Ablaufanschluß 38 abgesperrt ist. Der Verbraucheranschluß 42 und der Bremsenanschluß 46 sind gemeinsam über eine Zumeßblende 48, deren Öffnungsquerschnitt vom Maß der Verschiebung des Ventilkolbens abhängt, mit dem Zulaufanschluß 36 verbunden. Der Verbraucheranschluß 44 ist über eine Ablaufdrossel 49 mit dem Ablaufanschluß 40 verbunden. Ist die Steuerkammer 47 von Druck entlastet und wird eine zweite Steuerkammer 50 mit Steuerdruck beaufschlagt, so gelangt der Ventilkolben des Wegeventils 35 aus der Mittelstellung verschieden weit in eine zweite Arbeitsstellung, in der der Verbraucheranschluß 42 ungedrosselt mit dem Ablaufanschluß 38 verbunden ist. Der Bremsenanschluß und der andere Verbraucheranschluß 44 sind gemeinsam über die Zumeßblende 48 mit dem Zulaufanschluß 36 verbunden. Der Ablaufanschluß 40 ist abgesperrt. Der maximale Verschiebeweg des Ventilkolbens in die beiden entgegengesetzten Richtungen ist durch verstellbare Anschläge 51 begrenzt.

Die Druckwaage 37 ist gemäß den geschilderten Verbindungen zwischen den verschiedenen Anschlüssen des Wegeventils 35 in dessen beiden Arbeitsstellungen jeweils stromauf der Zumeßblende 48 angeordnet. Der Regelkolben der Druckwaage 37 wird in Richtung Schließen vom Druck stromauf der Zumeßblende und in Richtung Öffnen von einer Druckfeder 52 und von einem Druck beaufschlagt, der über eine Steuerleitung 53 aufgebracht wird, die mit dem Bremsenanschluß des Wegeventils und somit jeweils mit dem im Vorlauf zum Hydromotor 12 liegenden Verbraucheranschluß 42 oder 44 des Wegeventils 35 verbunden ist. Der Druck ist also jeweils gleich dem Druck stromab der Zumeßblende 48. Somit regelt die Druckwaage 37 eine bestimmte, der Kraft der Feder 52 äquivalente Druckdifferenz über die Zumeßblende 48 ein. Die über die Zumeßblende 48 fließende Druckmittelmenge hängt somit nur noch vom Öffnungsquerschnitt der Zumeßblende ab und ist vom Lastdruck und vom Pumpendruck unabhängig.

Der Regelkolben des Bremsventils 41 wird in Öffnungsrichtung vom am Verbraucheranschluß 42 des Wegeventils 35 und damit auch in der Verbraucherleitung 43 und am Motoranschluß 21 anstehenden Druck und in Schließrichtung von der Kraft einer Druckfeder 54 und von einem über eine Steuerleitung 55 aufgebrachten Vorsteuerdruck beaufschlagt, der konstant im Bereich von z.B. 40 bar liegt. Die beiden Drücke wirken an gleich großen Flächen, so daß das Bremsventil 41 bei ziehender Last zusammen mit der Drossel 49 den Ablauf von Druckmittel vom Hydromotor 12 über die Verbraucherleitung 45 jeweils so stark androsselt, daß in der Verbraucherleitung 43 ein Druck aufgebaut wird, der am Regelkolben des Bremsventils eine Kraft erzeugt, die der Kraft der Druckfeder 54 und der vom Vorsteuerdruck erzeugten Kraft das Gleichgewicht hält. Die Drehzahl des Hydromotors 12 ist also auch bei ziehender Last durch den Öffnungsquerschnitt der Zumeßblende 48 bestimmt. Außerdem ist der Druck am Bremsenanschluß 46 des Wegeventils 35 auch bei ziehender Last so hoch, daß die Bremse 13 gelüftet bleibt.

Zwischen den beiden Verbraucherleitungen 43 und 45 ist ein Druckbegrenzungsventil 60 angeordnet, das auf einen Druck eingestellt ist, der um 10 - 20 bar über dem von der Verstellpumpe 25 eingeregelten Druck, aber unter dem Einstelldruck des Druckbegrenzungsventils 29 liegt.

Das Wegeventil 35, die Druckwaage 37, das Bremsventil 41 und das Druckbegrenzungsventil 60 sind in einer Ventilplatte 61 untergebracht. Auf diese ist ein Vorsteuergerät 65 aufgebaut, über das eine absperrbare Bypassleitung 66 führt, die stromauf der Druckwaage 37 von der Zulaufleitung 27 ausgeht und in die Verbraucherleitung 45 mündet, also die Druckwaage 37 und das Wegeventil 35 umgeht. In der Bypassleitung 66 liegt eine Düse 67, die sich in der Platte 61 befindet und durch die die Druckmittelmenge, die dem Hydromotor 12 über die Bypassleitung 66 zuströmen kann, auf etwa 10 % der Druckmittelmenge begrenzt ist, die bei maximaler Öffnung der Zumeßblende 48 über das Wegeventil 35 zum Hydromotor 12 fließt.

Das Vorsteuergerät 65 enthält zwei Druckreduzierventile 68 und 69, ein Wegeventil 70, ein Rückschlagventil 71, diverse Wechseiventile 72, 73, 74 und 75, zwei Dämpfungsdüsen 76, zwei Entlastungsdüsen 77 und verschiedene Kanäle zur Verbindung der Ventile untereinander. Das Rückschlagventil 71 liegt in der Bypassleitung 66 und sperrt zur Zulaufleitung 27 hin. Stromab des Rückschlagventils 71 ist das Druckreduzierventil 68 mit seinem Druckanschluß an die Bypassleitung 66 angeschlossen. Ein Entlastungsanschluß des Druckregelventils 68 ist mit einem Leckagekanal 78 verbunden. Das Druckreduzierventil 68 ist auf einen festen Wert eingestellt und regelt an seinem Regelausgang und in einem Vorsteuerdruckversorgungskanal 79, an den auch die zum Bremsventil 41 führende Steuerleitung 55 angeschlossen ist, z.B. den schon erwähnten Druck in Höhe von 40 bar ein. Das zweite Druckreduzierventil 69, das mit seinem Druckanschluß an den Kanal 79, mit seinem Entlastungsanschluß an den Kanal 78 und mit seinem Regelausgang an einen Vorsteuerdruckkanal 80 angeschlossen ist, ist durch Verschwenken eines Steuerhebels 81 aus einer Neutralstellung verstellbar. Die Schwenkachse des Steuerhebels 81 ist mit 82 bezeichnet. Am Steuerhebel ist eine Steuerscheibe 83 mit einer Steuerkurve befestigt, an der ein Betätigungsstößel 84 des Druckreduzierventils 69 anliegt. Die Steuerkurve ist so gestaltet, daß bei einer Verschwenkung des Steuerhebels aus der Neutralstellung zunächst unabhängig von der Schwenkrichtung das Druckreduzierventil 69 in gleicher Weise verstellt wird. Und zwar nimmt der Vorsteuerdruck im Kanal 80 ausgehend von einem Schwenkwinkel von etwa 8 Grad bis zum Schwenkwinkel von 45 Grad kontinuierlich, wenn auch nicht unbedingt überall mit der gleichen Steigung, zu. Für die Verschwenkung in die eine Richtung ist der Schwenkwinkel des Steuerhebels 81 auf etwa 50 Grad begrenzt. In diese Richtung wird der Steuerhebel zum Fieren, also zum Abrollen der Trosse von der Winde 10 verschwenkt. Eine Verschwenkung des Steuerhebels in die andere Richtung erfolgt zum Hieven, wenn also die Trosse auf die Winde 10 aufgerollt werden soll. Dabei kehrt der Steuerhebel 81 sowohl bei einer Verschwenkung in Richtung Fieren als auch bei einer Verschwenkung in Richtung Hieven aufgrund einer auf ihn wirkenden Rückstellvorrichtung wieder in seine Neutrallage zurück, wenn er losgelassen wird. In Richtung Hieven ist der Steuerhebel allerdings bis zu einem Schwenkwinkel von etwa 100 Grad verschwenkbar, wobei er bei einer Verschwenkung über etwa 54 Grad hinaus in der dann von ihm eingenommenen Position verbleibt, auch wenn er losgelassen wird. In diesem Bereich wird die Winde 10 im Mooring betrieben. Die drei Winkelbereiche Fieren, Hieven und Mooring sind in Figur 1 schraffiert angedeutet und mit den Bezugszahlen 85 für das Fieren, 86 für das Hieven und 87 für das Mooring versehen. Dabei ist die Steuerscheibe 83 so gestaltet, daß im Mooringwinkelbereich 87 der Druck im Kanal 80 mit zunehmendem Schwenkwinkel des Steuerhebels 81 abnimmt.

Das Wegeventil 70 wird durch den Steuerhebel 81 mechanisch betätigt. Sein bewegliches Ventilelement ist nicht näher dargestellt, jedoch vorzugsweise als Drehschieber ausgebildet, dessen Drehachse mit der Achse 82 des Steuerhebels 81 zusammenfällt. Es kann insgesamt vier funktionsmäßig unterscheidbare Schaltstellungen einnehmen und besitzt 7 Anschlüsse, von denen zwei Anschlüsse 88 und 89 stromab des Rückschlagventils 71 und stromauf der Düse 67 in der Bypassleitung 66 liegen. Zu einem Anschluß 90 führt der Vorsteuerdruckkanal 80. Ein Anschluß 91 ist mit dem Leckagekanal 78 verbunden. Die drei restlichen Anschlüsse 92, 93 und 94 führen jeweils zu einem ersten Eingang eines Wechselventils 72 bzw. 73 bzw. 74. Der zweite Eingang des Wechselventils 74 ist mit dem Bremsenanschluß 46 des Wegeventils 35 verbunden. Vom Ausgang dieses Wechselventils führt eine Leitung 95 zum Ringraum 15 des Hydrozylinders 14. Der zweite Eingang jedes der beiden Wechselventile 72 und 73 ist jeweils mit einem externen Anschluß 95 verbunden, der vorliegend verschlossen ist, jedoch die Möglichkeit bietet, die Winde mit einem zweiten Vorsteuergerät zu steuern, das entfernt von dem aus der Platte 61 und dem Vorsteuergerät 65 bestehenden Block angeordnet ist. Für den Fall dieser Femsteuerung und für den Fall kleiner Vorsteuerdrücke ist die Leitung zwischen dem Anschluß 46 des Wegeventils 35 und dem Wechselventil 74 nötig, da dann über diese Leitung der Ringraum 15 des Hydrozylinders 14 mit Druck beaufschlagbar ist. Vom Ausgang des Wechselventils 72 führt über eine Dämpfungsdüse 76 eine Steuerleitung 96 zu der Steuerkammer 50 und vom Ausgang des Wechselventils 73 ebenfalls über eine Dämpfungsdüse 76 einer Steuerleitung 97 zur Steuerkammer 47 des Wegeventils 35. Das Wechselventil 75 liegt mit einem Eingang am Ausgang des Wechselventils 72 und mit seinem anderen Eingang am Ausgang des Wechselventils 73. Sein Ausgang ist über eine Steuerleitung 98 mit dem Steuereingang 16 des Hydromotors 12 verbunden.

Das Wegeventil 70 nimmt in der Neutralstellung des Steuerhebelsl 81 eine Position ein, in der die Anschlüsse 88, 89 und 90 abgesperrt und die anderen Anschlüsse mit dem Tankkanal 78 verbunden sind. Die Bypassleitung 66 ist also gesperrt. Die Steuerleitungen 95, 96, 97 und 98 sind zum Kanal 78 von Druck entlastet. Das Wegeventil 35 befindet sich somit in seiner Mittelstellung. Der Hydromotor 12 steht auf maximalem Schluckvolumen. Die Bremse 13 hat gegriffen.

Es werde nun der Steuerhebel zum Fieren in den Winkelbereich 85 verstellt. Dadurch gelangt das Wegeventil 70 in eine Schaltstellung, in der die Anschlüsse 89 und 94, die Anschlüsse 90 und 93 und die Anschlüsse 91 und 92 jeweils miteinander verbunden sind. Somit wird über die Anschlüsse 90 und 93 sowie das Wechselventil 73 und die Steuerleitung 97 die Steuerkammer 47 des Wegeventils 35 mit einem Steuerdruck beaufschlagt. Dieser Steuerdruck steht über das Wechselventil 75 und die Steuerleitung 98 auch am Steuereingang 16 des Hydromotors 12 an. Die Steuerkammer 50 des Wegeventils 35 ist über die Steuerleitung 96, das Wechselventil 72 sowie die Anschlüsse 91 und 92 des Wegeventils 70 bzw. über die eine Entlastungsdüse 77 von Druck entlastet. Das Wegeventil 35 wird somit in eine Position gebracht, in der der Zulaufanschluß 36 über die Zumeßblende 48 mit dem Verbraucheranschluß 42 und mit dem Bremsenanschluß 46 verbunden ist. In der Verbraucherleitung 43 und in der Zulaufleitung 27 baut sich ein Druck auf, der über das Wechselventil 74 auch im Ringraum 15 des Hydrozylinders 14 ansteht und schließlich genügt, um die Bremse zu lüften. Von der Hydropumpe 25 gefördertes Druckmittel kann nun über die Zulaufleitung 27, die Druckwaage 37, das Wegeventil 35 und die Verbraucherleitung 43 zum Hydromotor 12 und von dort über die Verbraucherleitung 25 die Drosselöffnung 49 des Wegeventils 35 und über das Bremsventil 41 zum Tank 26 strömen. Die Trosse wird von der Winde 10 abgewickelt. Dabei sorgt, auch wenn eine ziehende Last an der Trosse hängt, das Bremsventil 41 dafür, daß der Abfluß von Druckmittel vom Hydromotor 12 zum Tank nur gedrosselt geschehen kann, so daß in der Verbraucherleitung 43 ein bestimmter Druck aufrechterhalten wird. Dieser reicht aus, um die Bremse 13 gelüftet zu halten. Außerdem wird die Geschwindigkeit, mit der die Trosse abgespult wird, allein durch den von der Auslenkung des Steuerhebels 81 abhängigen Steuerdruck bestimmt. Dabei wird die Geschwindigkeit der Winde 10 auf zweierlei Weise beeinflußt. Etwa bis zu einem Auslenkwinkel von 25 Grad wird nur das Wegeventil 35, jedoch nicht der Hydromotor 12 verstellt. Dieser verbleibt bei maximalem Schluckvolumen und maximalem Drehmoment. Das Drehmoment ist in Figur 1 durch die radiale Ausdehnung der Felder 85, 86 und 87 angedeutet. Nach einer Auslenkung des Steuerhebels 81 von 25 Grad ist das Wegeventil 35 voll offen. Bei einer weiteren Auslenkung des Steuerhebels 81 wird nun das Schluckvolumen des Hydromotors 12 verkleinert, wodurch sich seine Drehzahl erhöht, sein Drehmoment aber erniedrigt. Dies ist durch die geringer werdende radiale Erstreckung des Feldes 85 in Figur 1 angedeutet.

Wird ausgehend von der gezeigten Neutralstellung der Steuerhebel 81 in den Hievenwinkelbereich 86 verschwenkt, so gelangt das Wegeventil 70 in eine Position, in der wiederum die Anschlüsse 89 und 94 miteinander verbunden sind. Der Anschluß 90 ist nun jedoch mit dem Anschluß 92 und der Anschluß 91 mit dem Anschluß 93 verbunden. Somit ist die Steuerkammer 47 von Druck entlastet und die Steuerkammer 50 des Wegeventils 35 mit einem vom Auslenkwinkel des Steuerhebels 81 abhängigen Vorsteuerdruck beaufschlagt. Dieser steht auch am Steuereingang 16 des Hydromotors 12 an. Das Wegeventil gelangt in seine zweite Arbeitstellung, in der von der Verstellpumpe 25 gefördertes Druckmittel über die Zulaufleitung 27, die Druckwaage 37, die Anschlüsse 36 und 44 mit der dazwischenliegenden Zumeßblende 48 und über die Verbraucherleitung 45 dem Hydromotor 12 zufließen kann. Der Abfluß des Druckmittels vom Hydromotor 12 erfolgt über die Verbraucherleitung 43 sowie die Anschlüsse 42 und 38 des Wegeventils 35 zum Tank 26. In der Verbraucherleitung 45 und in der Zulaufleitung 27 baut sich ein lastabhängiger Druck auf, der genügt, um die Bremse 13 zu lüften. Die Trosse wird nun auf die Winde 10 aufgespult.

Wird der Steuerhebel 81 noch weiter in den Mooringwinkelbereich 87 verschwenkt, so gelangt das Wegeventil 70 in eine Schaltstellung, in der die Anschlüsse 88 und 94 mit dem Anschluß 89 verbunden sind. Demgemäß ist die Bypassleitung 66 für den Durchfluß von Druckmittel offen und der Ringraum 15 des Hydrozylinders 14 ist an die Bypassleitung stromab des Rückschlagventils 71 angeschlossen. Der Anschluß 91 des Wegeventils 70 ist abgesperrt. Die Anschlüsse 92 und 93 sind mit dem Anschluß 90 also mit dem Regelausgang des Druckreduzierventils 69 verbunden. Somit steht in beiden Steuerkammern des Wegeventils 35 derselbe Vorsteuerdruck an, so daß dieses aufgrund seiner Federzentrierung in die Mittelstellung zurückkehrt. Der Vorsteuerdruck steht auch am Eingang 16 des Hydromotors 12 an. Dabei ist die Steuerkurve der Steuerscheibe 83 so gestaltet, daß zu Beginn des Mooringwinkelbereichs der Vorsteuerdruck so hoch ist, daß der Hydromotor auf sein minimales Schluckvolumen gestellt ist. Somit ist auch das vom Hydromotor 12 ausübbare Drehmoment minimal. Mit zunehmender Auslenkung des Steuerhebels 81 im Mooringwinkelbereich 87 nimmt der Vorsteuerdruck kontinuierlich ab, so daß sich das Schluckvolumen und damit das ausübbare Drehmoment des Hydromotors 12 kontinuierlich vergrößert. Dies ist arbeitsphysiologisch günstig.

Im Mooringwinkelbereich 87 kann dem Anschluß 22 des Hydromotors 12 Druckmittel nur noch über die Bypassleitung 66 zufließen. Dieser Zufluß ist durch die Düse 67 begrenzt, so daß im Mooring-Betrieb auch die Drehzahl des Hydromotors und damit die Geschwindigkeit, mit der die Trosse aufgespult wird begrenzt ist. Dies ist wichtig für die Betriebssicherheit. Denn da der Steuerhebel 81 im Mooringwinkelbereich 87 seine Position auch ohne Angriff einer äußeren Kraft beibehält, besteht die Möglichkeit, daß eine Person zunächst den Steuerhebel in den Mooringwinkelbereich stellt und sich dann an der Trosse zu schaffen macht oder sich im Bereich der Trosse aufhält. Durch die Düse 67 ist nun die Geschwindigkeit, mit der sich die Trosse bewegt, auf eine kleine Geschwindigkeit begrenzt. Auch wenn die Trosse reißt, bleibt die Geschwindigkeit, mit der die Trosse dann aufgespult wird, wegen der Düse 67 klein, wenn sie auch etwas höher als mit Last sein mag.

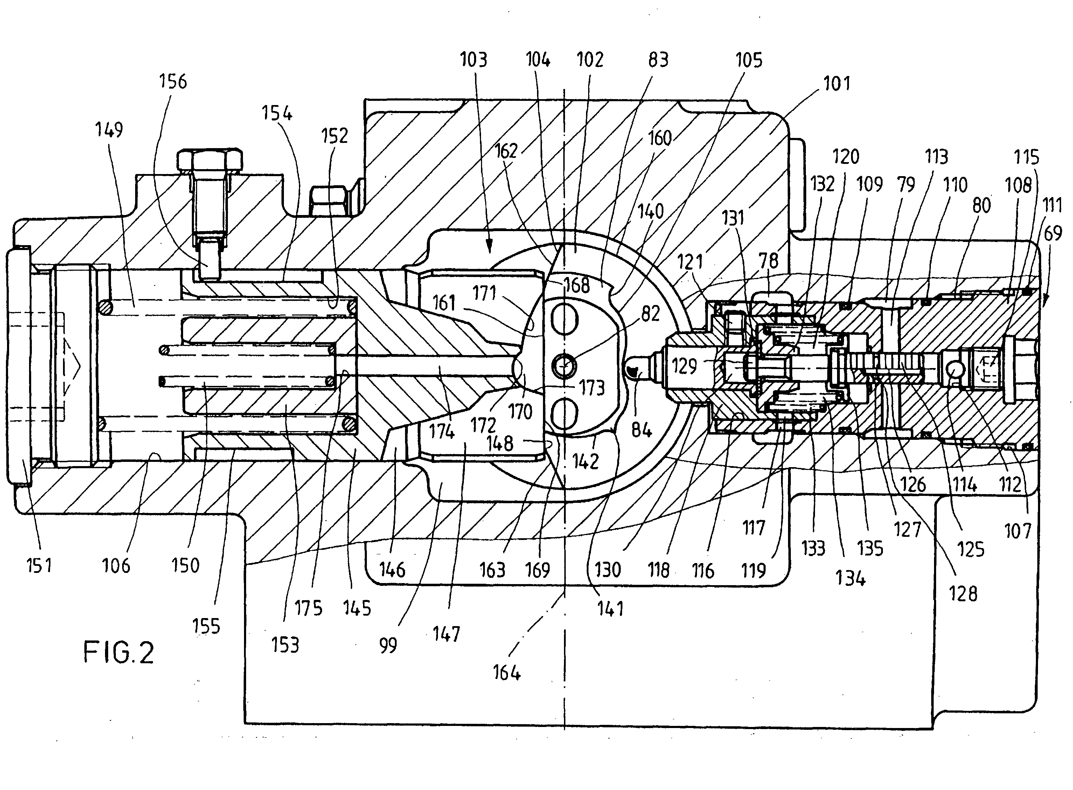

Der Steuerhebel 81 ist an einer aus dem Gehäuse 101 des Vorsteuergeräts 65 herausragenden in den Figuren nicht näher dargestellten Welle befestigt, mit der, wie aus Figur 2 ersichtlich, innerhalb des Gehäuses 101 eine Kurvenscheibe 102 mit einer mit einer Rückstellvorrichtung 103 zusammenwirkenden Kurvenbahn 104 und die axial sich unmittelbar an die Kurvenscheibe 102 anschließende Steuerscheibe 83 mit einer mit dem Stößel 84 des Druckreduzierventils 69 zusammenwirkenden Steuerkurve 105 verdrehsicher gekoppelt sind. Die Kurvenbahn 104 und die Steuerkurve 105 sind jeweils teilzylindrische Flächen, die sich axial über ein gewisses Maß erstrecken. Die Kurvenscheibe 102 und die Steuerscheibe 83 befinden sich in einem größeren Hohlraum 99 des Gehäuses 101, in den diametral gegenüberliegend, jedoch entsprechend dem axialen Versatz von Kurvenscheibe 102 und Steuerscheibe 83 ebenfalls axial zueinander versetzt zwei Gehäusebohrungen 106 und 107 münden. Die Gehäusebohrung 106 nimmt die Teile der Rückstellvorrichtung 103 auf. In die Gehäusebohrung 107 ist das Druckreduzierventil 69 eingesetzt.

Dieses Druckreduzierventil 69 ist derart von außen justierbar, daß bei einem ausgewählten Auslenkwinkel des Steuerhebels 81 im Kanal 80 ein ganz bestimmter Vorsteuerdruck ansteht. Bei diesem ausgewählten Auslenkwinkel soll das Wegeventil 35 ganz offen sein und die Verstellung des Hydromotors 12 beginnen. Das Druckreduzierventil 69 besitzt zur Justierung eine Steuerhülse 108, die vom nach außen offenen Ende der Gehäusebohrung 107 in diese eingeschraubt ist. Die Steuerhülse 108 ist außen dreifach gestuft und besitzt in jeder Stufe eine Dichtung 109, 110 und 111. Zwischen der Dichtung 109 mit dem kleinsten Durchmesser und der mittleren Dichtung 110 ist zwischen der Steuerhülse 108 und dem Gehäuse 110 ein Ringraum gebildet, der Teil des in Figur 1 mit 79 bezeichneten Steuerdruckversorgungskanals ist und in dem der von dem Druckreduzierventil 68 eingeregelte Druck in Höhe von 40 bar ansteht. Axial zwischen den beiden Dichtungen 110 und 111 befindet sich außen an der Steuerhülse 108 ein weiterer Ringraum, der zu dem Vorsteuerdruckkanal 80 aus Figur 1 gehört. Ein weiterer Ringraum zwischen der Steuerhülse 108 und dem Gehäuse 101 ist vor der Dichtung 109 geschaffen, wobei dieser Ringraum zum Leckagekanal 78 aus Figur 1 gehört.

Der zentrische Durchgang 112 durch die Steuerhülse 108 hat axial hintereinanderliegende Abschnitte mit unterschiedlichen Querschnitten. Ein Bohrungsabschnitt mit dem kleinsten Durchmesser befindet sich axial etwa zwischen den Dichtungen 109 und 110 und ist über zwei Radialbohrungen 113 zum Ringraum 79 hin offen. Er geht nach außen hin in einen etwas größeren und teilweise mit einem Innengewinde versehenen Bohrungsabschnitt über, von dem Radialbohrungen 114 ausgehen, die in den Ringraum 80 münden. In den Bohrungsabschnitt ist eine Madenschraube 115 eingeschraubt, durch die die erwähnten Bohrungsabschnitte nach außen hin verschlossen sind. Jenseits der Madenschraube 115 ist der Durchgang als Innenmehrkant ausgebildet, an dem man zum Verdrehen und damit zum axialen Verstellen der Steuerhülse 108 mit einem Werkzeug angreifen kann. Der Bohrungsabschnitt, in den die Radialbohrungen 113 münden, geht nach innen hin in einen nochmals gestuften Aufnahmeraum 116 über, von dem aus Radialbohrungen 117 in den Ringraum 78 führen. In diesen Aufnahmeraum 116 ist eine Führungsbuchse 118 für den Stößel 84 des Druckregelventils 69 eingesetzt und darin durch eine Madenschraube 121 unverlierbar gesichert. Die Führungsbuchse besitzt Radialbohrungen 119, über die zusammen mit einem zwischen der Steuerhülse 108 und der Führungsbuchse 118 gelegenen Ringraum ein zwischen der Steuerhülse 108, der Führungsbuchse 118 und dem Stößel 84 gebildeter Federraum 120 mit dem Ringraum 78 und damit mit Tank verbunden ist.

Der Durchgangsabschnitt, in den die Radialbohrungen 113 münden, dient als Führungsbohrung für einen Regelkolben 125 und steuert zusammen mit dem Regelkolben die Verbindungen zwischen den verschiedenen Ringräumen 78, 79 und 80. Die Kanten zwischen den Radialbohrungen 113 und dem Bohrungsabschnitt einerseits und die Kante zwischen dem Bohrungsabschnitt und dem größeren Federraum 120 andererseits bilden dabei die Steuerkanten. Der Regelkolben 125 ist ein Hohlkolben mit einer axialen Sackbohrung 126, die zu den Radialbohrungen 114 hin offen und über mehrere Radialbohrungen 127 mit der Außenseite des Regelkolbens verbunden ist. Die Radialbohrungen 127 gehen außen in eine Ringnut 128 über. Die axiale Erstreckung der Ringnut einschließlich der Radialbohrungen 127 ist geringfügig kleiner als der lichte axiale Abstand zwischen den Steuerkanten an der Steuerhülse 108, so daß es möglich ist, die Sackbohrung 26 mit positiver Überdeckung sowohl von den Radialbohrungen 113 als auch vom Federraum 120 zu trennen. Der Regelkolben 125 erstreckt sich durch den Federraum 120 hindurch und ragt mit einem Kopf 129 in eine Sackbohrung 130 des Stößels 84 hinein. Er hintergreift mit dem Kopf 129 eine Scheibe 131, die zwischen dem Stößel 84 und einem Federteller 132 angeordnet ist und nach Art eines geschlitzten Sicherungsrings den Kopf 129 hält. Eine von dem Federraum 120 aufgenommene Rückstellfeder 133 für den Stößel 84 stützt sich einerseits an der Steuerhülse 108 und andererseits über den Federteller 132 und die Scheibe 131 am Stößel 84 ab und drückt den Stößel gegen die Steuerkurve 105. Weiterhin ist vom Federraum 120 eine Regelfeder 134 aufgenommen, die zwischen einem an einer Schulter des Regelkolbens 125 aufliegenden Federteller 135 und dem Federteller 132 eingespannt ist und die dafür sorgt, daß in der gezeigten Ruhelage des Stößels 84 dessen Kopf 129 an der Scheibe 131 anliegt.

Das Druckbegrenzungsventil 69 ist bezüglich der Achse des Steuerhebels 81 so angeordnet, daß die Achse des Stößels 84 senkrecht die Achse 82 des Steuerhebels 81 schneidet. Die Steuerkurve 105 ist ausgehend von einer mittigen neutralen Linie, in der ihr Abstand von der Achse 82 minimal ist und an der der Stößel 84 in der Neutralstellung des Steuerhebels 81 anliegt, nach beiden Seiten hin zunächst gleich gestaltet. Ihr Abstand von der Achse 82 nimmt dabei kontinuierlich zu. Zur einen Seite hin endet die Steuerkurve 105 in einem radial nach außen abgehenden Flächenabschnitt 140, für den der Stößel 84 als Anschlag wirkt und der deshalb den Schwenkwinkel des Steuerhebels 81 in die eine Richtung begrenzt. In die andere Richtung befindet sich etwa im selben Abstand von der Mittellinie wie der Steuerkurvenabschnitt 140 eine kleine Erhöhung 141, aufgrund derer bei der Verschwenkung des Steuerhebels 81 das Drehmoment kurz ansteigt und damit der Bedienperson signalisiert wird, daß von einem Betriebsbereich in einen zweiten Betriebsbereich gewechselt wird. im Anschluß an die Erhöhung 141 verringert sich der Abstand der Steuerkurve von der Achse 82 in dem Steuerkurvenabschnitt 142.

In der in Figur 2 gezeigten Neutrallage der Steuerkurve 105 befindet sich der Stößel 84 und mit ihm der Regelkolben 125 des Druckreduzierventils 69 in einer Position, in der der Ringraum 80 über das Sackloch 126, die Radialbohrungen 127, den Federraum 120, die Radialbohrungen 119 und die Radialbohrungen 117 mit dem Ringraum 78 fluidisch verbunden ist. Wird nun der Steuerhebel ausgelenkt, so wird der Stößel 84 in die Steuerhülse 108 hinein verschoben. Über die Regelfeder 134 wird der Regelkolben 125 mitgenommen, so daß die Verbindung zwischen dem Sackloch 126 und dem Ringraum 78 unterbrochen und eine Verbindung zwischen dem Sackloch 126 und dem Ringraum 79 aufgemacht wird. Von diesem kann nun Druckmittel durch den Regelkolben 125 hindurch in den Ringraum 80 und weiter zu einem oder beiden Steuerräumen 47 und 50 des Wegeventils 35 fließen. Es baut sich ein Druck auf, durch den der Regelkolben 125 gegen die Regelfeder 134 zurückgeschoben wird, bis zwischen der Druckkraft und der Federkraft Gleichgewicht herrscht. Der Regelkolben 125 nimmt nun eine Regelposition ein. Die Höhe des Vorsteuerdruckes im Ringraum 80 ist dabei durch die Vorspannung bestimmt, die die Regelfeder 134 bei der gegebenen Position des Stößels 84 in der Regelstellung des Regelkolbens 125 hat. Diese Vorspannung und damit auch der Vorsteuerdruck in der gegebenen Stößelposition ist justierbar. Es wird dazu die Steuerhülse 108 etwas in das Gehäuse 101 hinein- oder aus dem Gehäuse 101 herausgeschraubt. Es verändert sich dadurch auch die Regelstellung des Regelkolbens 125 und damit bei gegebener Stößelposition die Vorspannung der Regelfeder 134 und damit die Höhe des Vorsteuerdrucks. Durch Einschrauben der Steuerhülse 108 erhöht sich der Vorsteuerdruck, durch Herausschrauben emiedrigt er sich. Für eine ausgewählte Position des Steuerhebels 81 kann somit ein bestimmter Vorsteuerdruck justiert werden. Abseits der ausgewählten Position des Steuerhebels 81 können dagegen noch Exemplarstreuungen auftreten, da die Steifigkeit der in verschiedenen Exemplaren eingesetzten Regelfedern variieren.

Die Rückstellvorrichtung 103 umfaßt ein Druckstück 145, das mit einem zylindrischen Abschnitt 146 in der Gehäusebohrung 106 geführt ist und mit einem Zweiflach 147, dessen ebene Flächen senkrecht zur Achse 82 ausgerichtet sind, in den Hohlraum 99 hineinragt und mit seiner parallel zur Achse 82 verlaufenden Stirnseite 148 an die Rückstellkurvenbahn 104 angedrückt wird. Eine Andrückkraft wird im gesamten Schwenkbereich von einer Rückstellfeder 149 ausgeübt. Zusätzlich wirkt in dem in Figur 1 mit 87 bezeichneten Mooringwinkelbereich eine weitere Andrückfeder 150. Die Federn befinden sich in einem Federraum zwischen dem Druckstück 145 und einer in die Gehäusebohrung 106 eingeschraubten Verschlußschraube 151. Um Federn der notwendigen Länge unterzubringen, besitzt das Druckstück 146 ein zur Verschlußschraube 151 hin offenes Sackloch 152, zwischen dessen Boden und der Verschlußschraube 151 die Rückstellfeder 149 eingespannt ist. Innerhalb der Rückstellfeder 149 befindet sich eine ebenfalls zur Verschlußschraube 151 hin offene Büchse 153, in deren Sackloch die Andrückfeder 150 zum größten Teil aufgenommen ist. In der in Figur 2 gezeigten Position des Druckstücks 145, in der dieses seinen größten Abstand von der Verschlußschraube 151 hat, ist die Andrückfeder 150 völlig entspannt. Erst nach einem bestimmten Weg des Druckstücks 145 an die Verschlußschraube 151 heran wird die Andrückfeder 150 wirksam.

Innerhalb des Führungsabschnitts 146 besitzt das Druckstück 145 an seiner Außenseite diametral gegenüberliegend zwei axial verlaufende Nuten 154 und 155, die unterschiedlich lang sind, dabei jedoch im gleichen Abstand von dem der Verschlußschraube 151 zugewandten Ende des Druckstücks 145 beginnen. in die Nut 154 greift mit geringem Spiel ein Stift 156 ein, der im Gehäuse 101 gehalten ist. Durch den Stift 156 ist das Druckstück 145 gegen Verdrehen gesichert. Die Nut 154 ist so lang, daß die axiale Bewegung des Druckstücks 145 durch den Stift 156 nicht begrenzt wird.

Die Kurvenbahn 104 setzt sich im wesentlichen aus vier voneinander unterscheidbaren flächenhaften Kurvenabschnitten zusammen. Ein Kurvenabschnitt 160 erstreckt sich über 180 Grad um die Achse 82 und ist kreiszylindrisch gekrümmt, hat also überall den gleichen Abstand von der Achse 82. In der Neutralstellung des Steuerhebels 81 und somit der Kurvenbahn 104, wie sie in Figur 2 gezeigt ist, steht die axiale Ebene 164, die durch die Achse 82 und die Enden des Kurvenabschnitts 160 geht, senkrecht auf der Achse des Druckstücks 145. Zwischen den beiden Enden des Kurvenabschnitts 160 befinden sich drei flächige, ebene Kurvenabschnitte 161, 162 und 163, die winkelig zueinander verlaufen. Der mittlere Kurvenabschnitt 161 dieser drei Kurvenabschnitte erstreckt sich in einem geringen Abstand von der Ebene 164 parallel zu dieser. Die beiden Kurvenabschnitte 162 und 163 verlaufen schräg vom Kurvenabschnitt 161 zum Kurvenabschnitt 160 hin.

Die der Kurvenbahn 104 zugewandte Stirnseite 148 des Druckstücks 145 besitzt zwei in einer Flucht zueinander liegende und senkrecht auf der Achse des Druckstücks 145 stehende ebene Flächenabschnitte 168 und 169, die sich von den runden Seitenflächenabschnitten des Zweiflachs 147 aus verschieden weit nach innen erstrecken. Dabei ist der Flächenabschnitt 169 wesentlich länger als der Flächenabschnitt 168. Zwischen diesen beiden Flächenabschnitten ist in die Stirnseite 148 eine senkrecht zu den Flachseiten durchgehende Ausnehmung 170 eingebracht, die ausgehend vom inneren Ende des Flächenabschnitts 168 durch eine gleichmäßig gekrümmte Fläche 171 begrenzt wird, deren Krümmung gleich der Krümmung des Kurvenabschnitts 160 der Kurvenbahn 104 ist. An die Fläche 171 schließt sich eine Rinne 172 an, die mittig in der Stirnseite des Druckstücks liegt. Die eine Seite der Rinne 171 geht in einer Anschlagfläche 173 in den ebenen Flächenabschnitt 169 über.

In die Rinne 172 mündet eine durch das Druckstück 145 hindurchgehende Axialbohrung 174, in deren Verlängerung auch der Boden der Büchse 153 eine Axialbohrung 175 aufweist. Somit ist der die Federn 149 und 150 aufnehmende Federraum ständig mit dem Hohlraum 99 des Gehäuses 101 fluidisch verbunden. Der Hohlraum 99 wiederum liegt in der Leckageleitung 78.

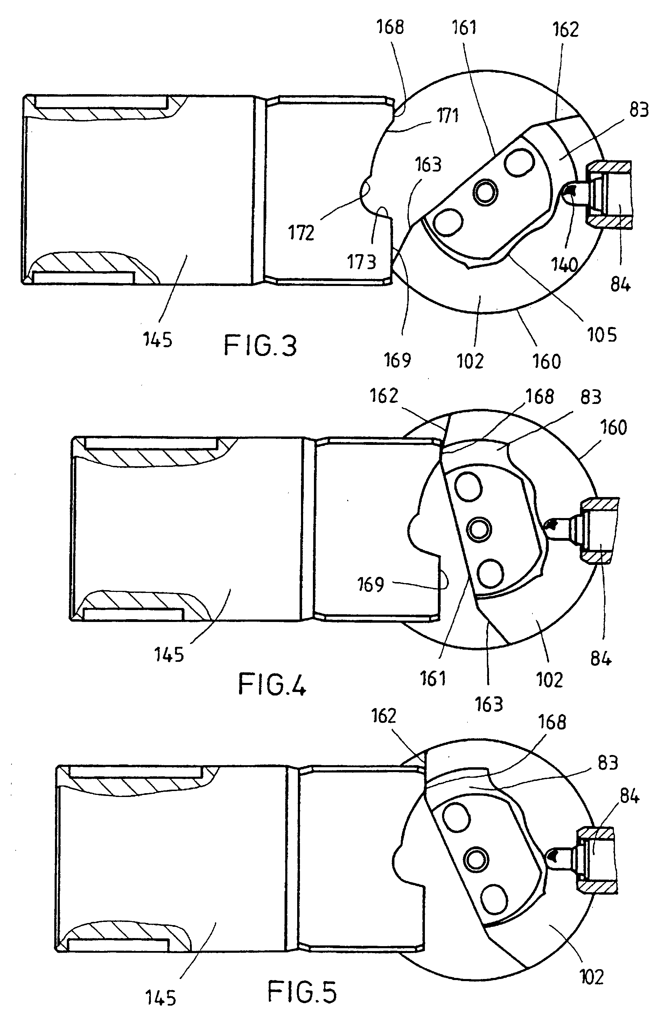

Zum Fieren, also zum Abspulen der Trosse von der Winde 10 wird der Steuerhebel 81 in den Fierenwinkelbereich 85 nach Figur 1 verschwenkt. Die Steuerscheibe 83 und die Kurvenscheibe 102 werden dadurch in der Ansicht nach Figur 2 im Uhrzeigersinn verdreht. Dabei gleitet zunächst die Ecke zwischen den Kurvenabschnitten 161 und 163 am Flächenabschnitt 169 des Druckstücks 145 entlang. Das Druckstück wird dadurch in Richtung der Verschlußschraube 151 verschoben, so daß sich die Vorspannung der Rückstellfeder 149 kontinuierlich vergrößert. Wird an irgendeiner Stelle der Steuerhebel losgelassen, so kehren das Druckstück 145 und der Steuerhebel unter der Wirkung der Rückstellfeder 149 wieder in die in Figur 2 gezeigte Neutralstellung zurück. Wird der Steuerhebel 81 aber noch weiter in Richtung Fieren verschwenkt, so liegt schließlich der Kurvenabschnitt 163 flächig am Flächenabschnitt 169 des Druckstücks 145 an. Bei einer weiteren Auslenkung des Steuerhebels wandert der Angriffspunkt des Druckstücks 145 sprungartig weiter von der Achse 82 des Steuerhebels weg zu der Ekke zwischen dem Kurvenabschnitt 163 und dem Kurvenabschnitt 160. Dies macht sich in einem steilen Anstieg des Drehmoments bemerkbar, das die Rückstellvorrichtung 103 auf den Steuerhebel ausübt. Damit wird der Bedienperson signalisiert, daß nun das Wegeventil 35 aus Figur 1 voll geöffnet ist und bei dem weiteren Ausschwenken des Steuerhebels 81 das Schluckvolumen des Hydromotors 12 verkleinert wird. Wenn die Kurvenabschnitte 163 und 169 flächig aneinander anliegen, soll der Vorsteuerdruck die bestimmte Höhe haben, die durch Justage des Druckregelventils 69 eingestellt wird. Beim weiteren Auslenken gleitet nun die Ecke zwischen dem Kurvenabschnitt 160 und dem Kurvenabschnitt 163 am Flächenabschnitt 169 entlang, wodurch das Druckstück 145 weiter in Richtung Verschlußschraube verschoben und die Rückstellfeder 149 weiter vorgespannt wird. Schließlich wird eine Endlage erreicht, wie sie in Figur 3 dargestellt ist. Die Steuerscheibe 83 ist mit dem Abschnitt 140 der Steuerkurve 105 gegen den Stößel 84 des Druckreduzierventils 69 gestoßen und kann nicht mehr weiter verdreht werden. Wird der Steuerhebel losgelassen, so kehrt er unter der Wirkung der Rückstellvorrichtung 103 wieder in seine Neutralstellung zurück.

Wird der Steuerhebel 81 aus seiner Neutralstellung, in der, wie aus Figur 2 ersichtlich, der Kurvenabschnitt 161 der Kurvenbahn 104 und die Flächenabschnitte 168 und 169 des Druckstücks 145 flächig aneinander anliegen, in Richtung Hieven verschwenkt, so werden die Steuerscheibe 83 und die Kurvenscheibe 102 in der Ansicht nach Figur 2 entgegen dem Uhrzeigersinn verdreht. Das Druckstück 145 beaufschlagt die Kurvenbahn 104 an der Ecke zwischen den Kurvenabschnitten 161 und 162, wie dies in Figur 4 dargestellt ist. Bei der weiteren Ausschwenkung des Steuerhebels 81 gelangt schließlich der Kurvenabschnitt 162 der Kurvenbahn 102 in flächige Anlage an den Flächenabschnitt 168 des Druckstücks 145. Dieser Zustand ist in Figur 5 dargestellt. Bei weiterem Verschwenken des Steuerhebels 81 bemerkt die Bedienperson einen steilen Anstieg der notwendigen Betätigungskraft und bekommt somit signalisiert, daß nun das Schluckvolumen des Hydromotors 12 verstellt wird. Schließlich liegt die Fläche 168 des Druckstücks 145 an der Ecke zwischen dem Kurvenabschnitt 162 und dem Kurvenabschnitt 160 der Kurvenbahn 104 an, wie dies in Figur 6 gezeigt ist. Dort ist der Steuerhebel 81 schon so weit verdreht, daß der Stößel 84 des Druckreduzierventils 69 gegen die Erhöhung 141 der Steuerkurve 105 gestoßen ist. Dies macht sich für die Bedienperson in einem weiteren Druckpunkt während des Verschwenkens des Steuerhebels 81 bemerkbar. Damit wird signalisiert, daß beim weiteren Ausschwenken des Steuerhebels der Hievenwinkelbereich 86 verlassen wird. Beim Loslassen des Steuerhebels 81 im Hievenwinkelbereich vermag die Rückstellvorrichtung 103 den Steuerhebel wieder in seine Neutralstellung zurückzustellen, da jede weitere Auslenkung des Steuerhebels in diesem Bereich mit einer Erhöhung der Vorspannung der Rückstellfeder 149 verbunden ist.

Wird der Steuerhebel unter erhöhtem Kraftaufwand, der zum Überwinden der Erhöhung 141 durch den Stößel 84 notwendig ist, weiter ausgeschwenkt, so gelangt zunächst die Kante zwischen den beiden Kurvenabschnitten 168 und 160 und in immer höherem Maße der Kurvenabschnitt 160 in den Bereich der Ausnehmung 170 des Druckstücks 145, wo der Kurvenabschnitt 160 an der Fläche 171 der Ausnehmung 170 anliegt. In den in Figur 6 gezeigten Positionen der einzelnen Bauteile ist das Druckstück 145 so weit in Richtung auf die Verschlußschraube 151 verschoben, daß die Andrückfeder 150 gerade noch spannungslos zwischen dem Druckstück und der Verschlußschraube liegt. Bei der weiteren Verdrehung der Kurvenscheibe 102 entgegen dem Uhrzeigersinn wird das Druckstück noch weiter zur Verschlußschraube hin verschoben und dadurch die Andrückfeder 150 gespannt, bis schließlich die Kante zwischen den Kurvenabschnitten 160 und 168 der Kurvenbahn 104 in den Bereich der Ausnehmung 170 des Druckstücks 145 gelangt. In Figur 7 ist ein Zustand gezeigt, in der der Stößel 84 die Erhöhung 141 der Steuerkurve 105 gerade überwunden hat und der Kurvenabschnitt 160 der Kurvenbahn 104 geringfügig in die Ausnehmung 170 eingetaucht ist und dort an der Fläche 171 anliegt. Das Druckstück 145 wird nun von der Kraft der Feder 149 und zusätzlich von der Kraft der Feder 150 an den Kurvenabschnitt 160 der Kurvenbahn 104 angedrückt. Weil die Krümmungen des Kurvenabschnitts 160 und der Fläche 171 gleich sind, führt das weitere Verschwenken des Steuerhebels nicht mehr zu einer stärkeren Vorspannung der Federn 149 und 150. Diese üben deshalb keine Rückstellkraft mehr auf den Steuerhebel aus. Der Steuerhebel befindet sich im Mooringwinkelbereich 87. Der Abstand zwischen dem Hievenwinkelbereich und dem Mooringwinkelbereich beträgt etwa 10 Grad, in denen der Stößel 84 die Erhöhung 141 der Steuerkurve 105 überwindet. Die dabei auftretende Erhöhung des Vorsteuerdrucks hat keine Auswirkungen auf das Wegeventil 35 und den Hydromotor 12, da am Ende des Hievenwinkelbereichs das Wegeventil 35 voll offen ist und der Hydromotor 12 auf sein kleinstes Schluckvolumen eingestellt ist. Am Ende des Mooringwinkelbereichs 87 aus Figur 1 stößt der Kurvenabschnitt 168 der Kurvenbahn 104 gegen die Anschlagfläche 173 der Ausnehmung 170, wie dies in Figur 8 dargestellt ist. Ein weiteres Verschwenken des Steuerhebels 81 ist nicht mehr möglich.

Jenseits der Erhohung 141 ist die Steuerkurve 105 in dem Bereich 142 so gestaltet, daß mit weiterer Auslenkung des Steuerhebels der Stößel 84 immer weiter aus der Fuhrungsbuchse 118 austritt, so daß die Federn des Druckreduzierventils 69 ein Drehmoment im Sinne einer weiteren Auslenkung auf den Steuerhebel 81 ausüben. Die Reibungskräfte zwischen dem Druckstück 145 und der Kurvenscheibe 102 sowie zwischen dem Stößel 84 und der Steuerscheibe 83 sind jedoch so groß, daß der Steuerhebel im Mooringwinkelbereich seine Position beibehält, auch wenn man ihn losläßt.

Aus Figur 8 geht insbesondere auch der Sinn der Rinne 172 in der Ausnehmung 170 des Druckstücks 145 hervor. Durch diese Rinne ist ein Druckmittelaustausch zwischen dem Federraum mit den Federn 149 und 150 und dem Hohlraum 99 im Gehäuse 101 auf einfache Weise auch dann gewährleistet, wenn der Steuerhebel 81 bis zum Ende des Mooringwinkelbereichs verschwenkt ist.

Die Nut 155 im Druckstück 145 hat für eine Steueranordnung mit Mooring-Betrieb der Winde keine Bedeutung. Allerdings ist nicht jede Winde auch für den Mooring-Betrieb vorgesehen. Die Nut 155 erlaubt es, das Druckstück 145 auch für eine Winde ohne Mooring-Betrieb zu benutzen. Es wird dazu nur im Vergleich zu dem in Figur 2 gezeigten Zustand um 180 Grad um seine Längsachse verdreht in das Gehäuse 101 eingebaut. Der Stift 156 greift dann in die Nut 155 ein. Wegen der Kürze dieser Nut begrenzt der Stift 156 den Weg, den das Druckstück 145 zur Verschlußschraube 151 hin verschoben werden kann. Man erhält damit einen Anschlag für den Steuerhebel am Ende des Hievenwinkelbereichs. Am Ende des Fierenwinkelbereichs kann ebenfalls der Stift 156 wirksam werden. Je nach Länge der Nut 155 stößt jedoch eventuell vorher schon der Stößel 84 gegen die Fläche 140 der Steuerkurve 105. Die Nut 155 erlaubt es also, ein Vorsteuergerät für eine Winde ohne Mooring-Betrieb und eine Winde mit Mooring-Betrieb mit dem gleichen Druckstück 145 aufzubauen. Ebenso kann eine vorhandene Winde umgebaut werden.

## Patentansprüche

1. Hydraulische Steueranordnung zum Betreiben einer Winde (10) im Fieren-, Hieven- und Mooring-Betrieb
mit einem verstellbaren Hydromotor (12) zum Antrieb der Winde (10),
mit einem proportional verstellbaren, in einer Mittelstellung federzentrierten Wegeventil (35) zur Steuerung der Strömungspfade eines Druckmittels zwischen einer Druckmittelquelle (25), dem Hydromotor (12) und einem Druckmittelvorratsbehälter (26),
mit einem zur Steuerung der Verstellung des Wegeventils (35) und des Hydromotors (12) dienenden Vorsteuergerät (65) mit einem willkürlich betätigbaren Steuerhebel (81), der aus einer Neutralstellung heraus zum unterschiedlich schnellen Fieren über einen bestimmten Fierenwinkelbereich (85) in die eine Richtung und zum unterschiedlich schnellen Hieven über einen bestimmten Hievenwinkelbereich (86) in die entgegengesetzte Richtung auslenkbar ist,
wobei bei einer Auslenkung des Steuerhebels (81) über den gesamten Hievenwinkelbereich (86) das Wegeventil (35) voll geöffnet und der Hydromotor (12) bis zu einem minimalen Schluckvolumen verstellt wird,
**dadurch gekennzeichnet, daß** der Steuerhebel (81), von der Neutralstellung aus gesehen, jenseits des Hievenwinkelbereichs (86) über einen Mooringwinkelbereich (87) auslenkbar ist und daß mit zunehmender Auslenkung des Steuerhebels (81) im Mooringwinkelbereich (87) der Hydromotor (12) in Richtung größeres Schluckvolumen verstellt wird.

2. Hydraulische Steueranordnung nach Anspruch 1, **dadurch gekennzeichnet, daß** das zur Auslenkung des Steuerhebels (81) notwendige Drehmoment zwischen dem Hievenwinkelbereich (86) und dem Mooringwinkelbereich (87) merkbar ansteigt.

3. Hydraulische Steueranordnung nach Anspruch 1 oder 2, **dadurch gekennzeichnet, daß** eine Düse (67) und ein zweites Wegeventil (70) vorhanden sind und daß dieses zweite Wegeventil (70) beim Übergang des Steuerhebels (81) vom Hievenwinkelbereich (86) zum Mooringwinkelbereich (87) in eine Mooringstellung umschaltbar ist, in der die Düse (67) im Sinne einer Begrenzung der Drehzahl des Hydromotors (12) auf kleine Werte beim Seilaufwickeln im über den Hydromotor (12) führenden Strömungspfad des Druckmittels liegt.

4. Hydraulische Steueranordnung nach Anspruch 3, **dadurch gekennzeichnet, daß** die Düse (67) und das zweite Wegeventil (70) in Serie zueinander und in einer Bypassleitung (66) zum ersten Wegeventil (35) angeordnet sind und daß das erste Wegeventil (35) beim Übergang des Steuerhebels (81) vom Hievenwinkelbereich (86) zum Mooringwinkelbereich (87) in eine Mittelstellung gebracht wird, in der der Zulauf von Druckmittel zum Hydromotor (12) unter Druck über das erste Wegeventil (35) gesperrt ist.

5. Hydraulische Steueranordnung nach Anspruch 4, **dadurch gekennzeichnet, daß** das Vorsteuergerät (65) ein hydraulisches Vorsteuergerät ist und daß das erste Wegeventil (35) bei einer Stellung des Steuerhebels (81) im Fierenwinkelbereich (85) in einer ersten Vorsteuerkammer (47) mit einem Vorsteuerdruck, bei einer Stellung des Steuerhebels (81) im Hievenwinkelbereich (86) in einer zweiten Vorsteuerkammer (50) mit einem Vorsteuerdruck und bei einer Stellung des Steuerhebels (81) im Mooringwinkelbereich (87) in beiden Vorsteuerkammern (47, 50) mit dem gleichen, auch am Hydromotor (12) anstehenden Vorsteuerdruck beaufschlagbar ist.

6. Hydraulische Steueranordnung nach Anspruch 5, **dadurch gekennzeichnet, daß** das Vorsteuergerät (65) ein verstellbares Pilotventil (69) mit einem Vorsteuerdruckanschluß (80) umfaßt, der über ein durch die Auslenkung des Steuerhebels (81) betätigtes Wegeventil (70) bei einer Bewegung des Steuerhebels (81) im Fierenwinkelbereich (85) mit der ersten Vorsteuerkammer (47), bei einer Bewegung des Steuerhebels (81) im Hievenwinkelbereich (86) mit der zweiten Vorsteuerkammer (50) und bei einer Bewegung des Steuerhebels (81) im Mooringwinkelbereich (87) mit beiden Vorsteuerkammem (47, 50) des ersten Wegeventils (35) verbunden ist.

7. Hydraulische Steueranordnung nach Anspruch 4, 5 oder 6, **dadurch gekennzeichnet, daß** in Serie zu einer bei einer Verstellung des proportional verstellbaren Wegeventils (35) aus der Mittelstellung heraus proportional geöffneten Zumeßblende (48) eine eine feste Druckdifferenz über die Zumeßblende (48) aufrechterhaltende Druckwaage (37) angeordnet ist und daß die Bypassleitung (66) Durchwaage (37) und Wegeventil (35) umgeht.

8. Hydraulische Steueranordnung nach einem der Ansprüche 4 bis 7 **gekennzeichnet durch** ein Rückschlagventil (71), das in der Bypassleitung (66) angeordnet ist und in Richtung Zufluß von Druckmittel von der Druckmittelquelle (25) zum Hydromotor (12) öffnet, und **durch** ein Druckbegrenzungsventil (60), das zwischen den beiden Anschlüssen (21, 22) des Hydromotors (12) angeordnet ist und **durch** das der Druck am im Mooring-Betrieb mit Druck beaufschlagten Anschluß (22) des Hydromotors (12) auf einen Maximalwert begrenzt ist.

9. Hydraulische Steueranordnung nach Anspruch 8, **dadurch gekennzeichnet, daß** stromauf der Düse (67) an die Bypassleitung (66) der Druckanschluß eines Druckreduzierventils (68) angeschlossen ist und daß das Rückschlagventil (71) zwischen dem Druckanschluß und der Druckmittelquelle (25) angeordnet ist.

10. Hydraulische Steueranordnung nach einem der Ansprüche 3 bis 9, **dadurch gekennzeichnet, daß** für die Winde (10) eine hydraulisch lüftbare mechanische Bremse (13) vorgesehen ist und daß die Bremse (13) in der Mooringstellung des zweiten Wegeventils (70) über dieses mit Druckmittel beaufschlagbar ist.

11. Hydraulische Steueranordnung nach Anspruch 8 oder 9 und nach Anspruch 10, **dadurch gekennzeichnet, daß** die in der Bypassleitung (66) befindlichen Anschlüsse (88, 89) des zweiten Wegeventils (70) stromab des Rückschlagventils (71) liegen.

12. Hydraulische Steueranordnung nach einem vorhergehenden Anspruch, **gekennzeichnet durch** eine Rückstellvorrichtung (103) für den Steuerhebel (81), die eine Rückstellfeder (149) umfaßt, die im Fierenwinkelbereich (85) und im Hievenwinkelbereich (86) mit zunehmender Auslenkung des Steuerhebels (81) stärker vorgespannt wird, während eine Verstellung des Steuerhebel (81) im Mooringwinkelbereich (87) indifferent im Hinblick auf die Vorspannung der Rückstellfeder (149) ist.

13. Hydraulische Steueranordnung nach Anspruch 12, **dadurch gekennzeichnet, daß** mit dem Steuerhebel (81) verdrehsicher eine Kurvenscheibe (102) mit einer Kurvenbahn (104) verbunden ist, an der unter der Wirkung der Rückstellfeder (149) ein Druckstück (145) der Rückstellvorrichtung (103) anliegt, und daß die Kurvenbahn (104) einen im Hinblick auf die Position des Druckstücks (145) indifferenten, neutralen Kurvenabschnitt (160) aufweist, an dem das Druckstück (145) anliegt, wenn sich der Steuerhebel (81) im Mooringwinkelbereich (87) befindet.

14. Hydraulische Steueranordnung nach Anspruch 13, **dadurch gekennzeichnet, daß** das Druckstück (145) radial bezüglich der Drehachse (82) des Steuerhebels (81) bewegbar geführt ist und sich die Kurvenbahn (104) am Umfang der Kurvenscheibe (102) befindet und daß der neutrale Kurvenabschnitt (160) durch einen Kreis- oder Kreiszylinderbogen gebildet wird.

15. Hydraulische Steueranordnung nach Anspruch 14, **dadurch gekennzeichnet, daß** der Winkelabstand des Mooringwinkelbereichs (87) von der Neutralstellung des Steuerhebels (81) kleiner als 90 Grad ist und daß das Druckstück (145) eine durch einen Kreisbogen oder eine Kreiszylinder (171) begrenzte Ausnehmung (170) aufweist, in die der neutrale Kurvenabschnitt (160) der Kurvenscheibe (102) zu Beginn des Mooringwinkelbereichs (87) eintaucht.

16. Hydraulische Steueranordnung nach Anspruch 15, **dadurch gekennzeichnet, daß** das Druckstück (145) verdrehsicher geführt ist.

17. Hydraulische Steueranordnung nach einem der Ansprüche 12 bis 15, **dadurch gekennzeichnet, daß** das Druckstück (145) im Mooringwinkelbereich (87) zusätzlich zur Rückstellfeder (149) von einer zweiten Feder (150) gegen die Kurvenscheibe (102) gedrückt wird.

18. Hydraulische Steueranordnung nach Anspruch 17, **dadurch gekennzeichnet, daß** die zweite Feder (150) im Hievenwinkelbereich (86) lose in einem Federraum liegt, daß zwischen dem Hievenwinkelbereich (86) und dem Mooringwinkelbereich (87) ein Winkelabstand besteht und daß die zweite Feder (150) in dem Winkelbereich zwischen Hieven und Mooring durch Verschieben des Druckstücks (145) gespannt wird.

19. Hydraulische Steueranordnung nach Anspruch 18, **dadurch gekennzeichnet, daß** daß sich innerhalb der Rückstellfeder (149) eine Büchse (153) befindet, die mit ihrem Boden dem Druckstück (145) zugewandt ist, und daß in der Büchse (153) die zweite Feder (150) aufgenommen ist.

20. Hydraulische Steueranordnung nach einem der Ansprüche 13 bis 19,
**dadurch gekennzeichnet, daß** die Auslenkung des Steuerhebels (81) am Ende des Fierenwinkelbereichs (85) und am Ende des Mooringwinkelbereichs (87) jeweils durch eine Anschlagfläche (140, 162) an einem mit dem Steuerhebel (81) mitgedrehten Teil (83, 102) und einen Gegenanschlag (84, 173) begrenzt ist und daß das Druckstück (145) einen Anschlag (155) aufweist, durch den in Abhängigkeit von der Art des Einbaus des Druckstücks (145) und/oder eines Gegenanschlags der Weg des Druckstücks (145) in Richtung stärkerer Vorspannung der Rückstellfeder (149) am Ende des Hievenwinkelbereichs (86) begrenzt ist oder nicht.

21. Hydraulische Steueranordnung nach Anspruch 20, **dadurch gekennzeichnet, daß** die kreisbogenförmige oder kreiszylindrische Ausnehmung (170)) in der der Kurvenscheibe (102) zugewandten Stirnseite (148) des Druckstücks (145) asymmetrisch bezüglich der Achse des Druckstücks (145) angeordnet ist und in einer Anschlagfläche (173) für die Kurvenscheibe (102) endet.

22. Hydraulische Steueranordnung nach Anspruch 20 oder 21, **dadurch gekennzeichnet, daß** das Druckstück (145) durch eine in seine Führungsrichtung verlaufende Nut (154) und einen in diese Nut (154) eingreifenden Zapfen (156) oder Leiste verdrehgesichert ist und daß eine zweite Nut (155) vorhanden ist, die vorzugsweise der ersten Nut (154) bezüglich der Achse des Druckstücks (145) diametral gegenüberliegt und die kürzer als die erste Nut (154) ist.

23. Hydraulische Steueranordnung nach einem der Ansprüche 15 bis 22, **dadurch gekennzeichnet, daß** die Ausnehmung (170) in der Kurvenscheibe (102) zugewandten Stirnseite (148) des Druckstücks (145) kreiszylindrisch ist und eine Rinne (172) aufweist, durch die auch bei ganz ausgelenktem Steuerhebel (81) ein Freiraum zwischen der Kurvenscheibe (102) und dem Druckstück (145) besteht und die in einem in den Federraum hinter dem Druckstück (145) mündenden Strömungspfad (174, 175) für Druckmittel liegt.

## Claims

1. A hydraulic control arrangement for operating a winch (10) in the easing, hoisting and mooring mode, having an adjustable hydraulic motor (12) to drive the winch (10), having a proportionally adjustable directional control valve (35), spring-centred in a mid position, to control the flow paths of a pressure medium between a pressure medium source (25), the hydraulic motor (12) and a pressure medium reservoir (26), having a pilot controller (65) which is used to control the adjustment of the directional control valve (35) and of the hydraulic motor (12) and has a control lever (81) which can be actuated as desired and can be deflected from a neutral position in one direction over a specific easing angle range (85) for easing at different speeds and can be deflected in the opposite direction over a specific hoisting angle range (86) for hoisting at different speeds, during a deflection of the control lever (81) over the entire hoisting angle range (86), the directional control valve (35) being fully opened and the hydraulic motor (12) being adjusted to a minimum displacement volume, **characterized in that** the control lever (81), as viewed from the neutral position, can be deflected over a mooring angle range (87) on the other side of the hoisting angle range (86), and by the fact that with increasing deflection of the control lever (81) in the mooring angle range (87) the hydraulic motor (12) is adjusted in the direction of a greater displacement volume.

2. The hydraulic control arrangement as claimed in claim 1, **characterized in that** the torque needed to deflect the control lever (81) rises noticeably between the hoisting angle range (86) and the mooring angle range (87).

3. The hydraulic control arrangement as claimed in claim 1 or 2, **characterized in that** there are a nozzle (67) and a second directional control valve (70), and by the fact that at the transition of the control lever (81) from the hoisting angle range (86) to the mooring angle range (87), this second directional control valve (70) can be changed over into a mooring position in which the nozzle (67) is located in the flow path of the pressure medium leading via the hydraulic motor (12) , with the effect of limiting the rotational speed of the hydraulic motor (12) to small values when winding up cable.

4. The hydraulic control arrangement as claimed in claim 3, **characterized in that** the nozzle (67) and the second directional control valve (70) are arranged in series with each other and in a bypass line (66) to the first directional control valve (35), and by the fact that at the transition of the control lever (81) from the hoisting angle range (86) to the mooring angle range (87), the first directional control valve (35) is brought into a mid position in which the feed of pressure medium under pressure via the first directional control valve (35) to the hydraulic motor (12) is blocked.

5. The hydraulic control arrangement as claimed in claim 4, **characterized in that** the pilot controller (65) is a hydraulic pilot controller, and by the fact that the first directional control valve (35) can be acted on with a pilot control pressure in a first pilot control chamber (47) in a position of the control lever (81) in the easing angle range (85), can be acted on by a pilot control pressure in a second pilot control chamber (50) in a position of the control lever (81) in the hoisting angle range (86), and can be acted on by the same pilot control pressure, also present at the hydraulic motor (12), in both pilot control chambers (47,50) in a position of the control lever (81) in the mooring angle range (87).

6. The hydraulic control arrangement as claimed in claim 5, **characterized in that** the pilot controller (65) comprises an adjustable pilot valve (69) with a pilot control pressure port (80) which, via a directional control valve (70) that is operated by the deflection of the control lever (81), is connected to the first pilot control chamber (47) during a movement of the control lever (81) in the easing angle range (85), is connected to the second pilot control chamber (50) during a movement of the control lever (81) in the hoisting angle range (86), and is connected to both pilot control chambers (47,50) of the first directional control valve (35) during a movement of the control lever (81) in the mooring angle range (87).

7. The hydraulic control arrangement according to claim 4, 5 or 6, **characterized in that** in series with a feed metering orifice (48) which is opened proportionally during a displacement of the proportionally adjustable directional control valve (35) from the mid position, there is arranged a pressure compensator (37) that maintains a fixed pressure difference across the feed metering orifice (48), and by the fact that the bypass line (66) circumvents the pressure compensator (37) and directional control valve (35).

8. The hydraulic control arrangement as claimed in any of claims 4 to 7, **characterized by** a nonreturn valve (71), which is arranged in the bypass line (66) and opens in the direction of the flow of pressure medium from the pressure medium source (25) to the hydraulic motor (12), and by a pressure limiting valve (60), which is arranged between the two ports (21,22) of the hydraulic motor (12) and by means of which the pressure on the port (22) of the hydraulic motor (12) to which pressure is applied in the mooring mode is limited to a maximum value.

9. The hydraulic control arrangement as claimed in claim 8, **characterized in that** the pressure port of a pressure reducing valve (68) is connected to the bypass line (66) upstream of the nozzle (67), and by the fact that the nonreturn valve (71) is arranged between the pressure port and the pressure medium source (25).

10. The hydraulic control arrangement as claimed in any of claims 3 to 9, **characterized in that** a hydraulically releasable mechanical brake (13) is provided for the winch (10), and by the fact that, in the mooring position of the second directional control valve (70), pressure medium can be applied to the brake (13) via said valve.

11. The hydraulic control arrangement as claimed in claim 8 or 9 and as claimed in claim 10, **characterized in that** the ports (88, 89) of the second directional control valve (70) which are located in the bypass line (66) are located downstream of the nonreturn valve (71).

12. The hydraulic control arrangement as claimed in any of the preceding claims, **characterized by** a restoring device (103) for the control lever (81), which comprises a restoring spring (149) which, in the easing angle range (85) and in the hoisting angle range (86) is prestressed to a greater extent as the deflection of the control lever (81) increases, while an adjustment of the control lever (81) in the mooring angle range (87) is indifferent with regard to the prestress of the restoring spring (149).

13. The hydraulic control arrangement as claimed in claim 12, **characterized in that** a cam disk (102) having a cam track (104) is rotationally securely connected to the control lever (81), on which disk a pressure piece (145) of the restoring device (103) bears under the action of the restoring spring (149), and by the fact that the cam track (104) has a neutral cam section (160) which is indifferent with regard to the position of the pressure piece (145) and on which the pressure piece (145) bears when the control lever (81) is in the mooring angle range (87).

14. The hydraulic control arrangement as claimed in claim 13, **characterized in that** the pressure piece (145) is movably guided radially with respect to the axis of rotation (82) of the control lever (81), and the cam track (104) is located on the periphery of the cam disk (102) and by the fact that the neutral cam section (160) is formed by a circular or circularly cylindrical arc.

15. The hydraulic control arrangement as claimed in claim 14, **characterized in that** the angular spacing of the mooring angle range (87) from the neutral position of the control lever (81) is less than 90 degrees, and by the fact that the pressure piece (145) has a recess (170) which is bounded by a circular arc or a circular cylinder (171), into which the neutral cam section (160) of the cam disk (102) dips at the start of the mooring angle range (87).

16. The hydraulic control arrangement as claimed in claim 15, **characterized in that** the pressure piece (145) is guided in a rotationally secure manner.

17. The hydraulic control arrangement as claimed in any of claims 12 to 15, **characterized in that,** in the mooring angle range (87), the pressure piece (145) is pressed against the cam disk (102) by a second spring (150) in addition to the restoring spring (149).

18. The hydraulic control arrangement as claimed in claim 17, **characterized in that** the second spring (150) lies loosely in a spring chamber in the hoisting angle range (86), by the fact that there is an angular spacing between the hoisting angle range (86) and the mooring angle range (87), and by the fact that the second spring (150) is tensioned as a result of displacement of the pressure piece (145) in the angle range between hoisting and mooring.

19. The hydraulic control arrangement as claimed in claim 18, **characterized in that** within the restoring spring (149) there is a bush (153) which faces the pressure piece (145) with its base, and by the fact that the second spring (150) is accommodated in the bush (153).

20. The hydraulic control arrangement as claimed in any of claims 13 to 19, **characterized in that** the deflection of the control lever (81) at the end of the easing angle range (85) and at the end of the mooring angle range (87) is in each case limited by a stop face (140, 162) on a part (83, 102) that corotates with the control lever (81) and by an opposing stop (84, 173), and by the fact that the pressure piece (145) has a stop (155) by means of which, depending on the manner of installation of the pressure piece (145) and/or of an opposing stop, the travel of the pressure piece (145) is limited in the direction of higher prestressing of the restoring spring (149) at the end of the hoisting angle range (86) or not.

21. The hydraulic control arrangement as claimed in claim 20, **characterized in that** the circular-arc or circularly cylindrical recess (170) **in that** end (148) of the pressure piece (145) which faces the cam disk (102) is arranged asymmetrically with respect to the axis of the pressure piece (145) and ends in a stop face (173) for the cam disk (102).

22. The hydraulic control arrangement as claimed in claim 20 or 21, **characterized in that** the pressure piece (145) is rotationally secured by a groove (154) extending in its guide direction and by a pin (156) or strip engaging in this groove (154), and by the fact that there is a second groove (155), which is preferably located diametrically opposite the first groove (154), with respect to the axis of the pressure piece (145), and which is shorter than the first groove (154).

23. The hydraulic control arrangement as claimed in any of claims 15 to 22, **characterized in that** the recess (170) **in that** end (148) of the pressure piece (145) which faces the cam disk (102) is circularly cylindrical and has a channel (172) through which, even when the control lever (81) is fully deflected, there is a clearance between the cam disk (102) and the pressure piece (145), and which is located in a flow path (174, 175) for pressure medium which opens into the spring chamber behind the pressure piece (145).

## Revendications

1. Un dispositif de commande hydraulique pour l'actionnement d'un treuil (10) pour un fonctionnement en mode de filage, de halage et d'amarrage,
doté d'un moteur (12) hydraulique à cylindrée variable pour l'entraînement du treuil (10),
doté d'un distributeur (35) à action proportionnelle et à centrage dans une position médiane par un ressort pour la commande des cheminements du flux d'un fluide de pression entre une source (25) de fluide de pression, le moteur (12) hydraulique et un réservoir (26) de stockage de fluide de pression,
doté d'un appareil (65) de commande, qui sert à la commande du déplacement du distributeur (35) et du moteur (12) hydraulique et qui est doté d'un levier (81) de commande à actionnement de façon volontaire, lequel peut être incliné hors d'une position neutre pour un filage à des vitesses différentes dans l'un des sens, sur une zone angulaire (85) de filage déterminée, et pour un halage à des vitesses différentes dans le sens opposé, sur une zone angulaire (86) de halage déterminée,
cependant que pour une inclinaison du levier (81) de commande sur la totalité de la zone angulaire (86) de halage, le distributeur (35) est entièrement ouvert et le moteur (12) hydraulique est déplacé sur une cylindrée minimum,
**caractérisé en ce que**
le levier (81) de commande, considéré à partir de la position neutre, peut être incliné au-delà de la zone angulaire (86) de halage, dans une zone angulaire (87) d'amarrage, et qu'avec une inclinaison croissante du levier (81) de commande dans la zone angulaire (87) d'amarrage, le moteur (12) hydraulique est déplacé dans le sens d'une cylindrée plus importante.

2. Un dispositif de commande hydraulique selon la revendication n° 1, **caractérisé en ce que** le couple de rotation nécessaire à l'inclinaison du levier (81) de commande augmente de façon nette entre la zone angulaire (86) de halage et la zone angulaire (87) d'amarrage.

3. Un dispositif de commande hydraulique selon la revendication n° 1 ou 2, **caractérisé en ce qu'**un gicleur (67) et un deuxième distributeur (70) sont présents et que, lors du passage du levier (81) de commande de la zone angulaire (86) de halage vers la zone angulaire (87) d'amarrage, ce deuxième distributeur (70) peut être amené dans une position d'amarrage, où le gicleur (67) est disposé dans le cheminement du flux du fluide de pression passant par le moteur (12) hydraulique pendant l'enroulement du câble, dans le sens d'une limitation de la vitesse de rotation du moteur (12) hydraulique à des valeurs faibles.

4. Un dispositif de commande hydraulique selon la revendication n° 3, **caractérisé en ce que** le gicleur (67) et le deuxième distributeur (70) sont branchés en série l'un avec l'autre et disposés dans une conduite (66) en by-pass par rapport au premier distributeur (35) et que, lors du passage du levier (81) de commande de la zone angulaire (86) de halage vers la zone angulaire (87) d'amarrage, le premier distributeur (35) est amené dans une position médiane, où l'arrivée de fluide de pression sous pression vers le moteur (12) hydraulique à travers ledit premier distributeur (35) est fermée.

5. Un dispositif de commande hydraulique selon la revendication n° 4, **caractérisé en ce que** l'appareil (65) de commande est un appareil de commande hydraulique et que le premier distributeur (35) peut être sollicité par une pression de commande dans une première chambre (47) de pilotage pour une position du levier (81) de commande dans la zone angulaire (85) de filage, par une pression de commande dans une seconde chambre (50) de pilotage pour une position du levier (81) de commande dans la zone angulaire (86) de halage et par une même pression de commande, qui également règne au niveau du moteur (12) hydraulique, dans les deux chambres (47, 50) de pilotage pour une position du levier (81) de commande dans la zone angulaire (87) d'ancrage.

6. Un dispositif de commande hydraulique selon la revendication n° 5, **caractérisé en ce que** l'appareil (65) de commande comporte une valve (69) de pilotage dotée d'un raccord (80) de pression de pilotage, qui, au travers d'un distributeur (70) actionné par l'inclinaison du levier (81) de commande, est raccordé à la première chambre (47) de pilotage du premier distributeur (35) lors d'un mouvement du levier (81) de commande dans la zone angulaire (85) de filage, est raccordé à la seconde chambre (50) de pilotage lors d'un mouvement du levier (81) de commande dans la zone angulaire (86) de halage et est raccordé aux deux chambres (47, 50) de pilotage lors d'un mouvement du levier (81) de commande dans la zone angulaire (87) d'amarrage.

7. Un dispositif de commande hydraulique selon la revendication n° 4, 5 ou 6, **caractérisé en ce que,** en série avec un orifice (48) d'étranglement réglable, qui ouvre de façon proportionnelle lors d'un déplacement du distributeur (35) à action proportionnelle hors de sa position médiane, est disposée une balance (37) de pression, qui maintient une différence de pression constante sur l'orifice (48) d'étranglement réglable, et que la conduite (66) en by-pass contourne la balance (37) de pression et le distributeur (35).

8. Un dispositif de commande hydraulique selon une des revendications n° 4 à 7, **caractérisé par** un clapet (71) anti-retour, qui est disposé dans la conduite (66) en by-pass et ouvre dans le sens de l'alimentation en fluide de pression par la source (25) de fluide de pression vers le moteur (12) hydraulique, et par un limiteur (60) de pression, qui est disposé entre les deux raccords (21, 22) du moteur (12) hydraulique et par le fait que la pression au niveau du raccord (22) du moteur (12) hydraulique, qui est soumis à la pression pendant le fonctionnement en mode amarrage, est limitée à une valeur maximum.

9. Un dispositif de commande hydraulique selon la revendication n° 8, **caractérisé en ce qu'**à la conduite (66) en by-pass, en amont du gicleur (67), est raccordé le raccord de pression d'un réducteur (68) de pression et que le clapet (71) anti-retour est disposé entre le raccord de pression et la source (25) de fluide de pression.

10. Un dispositif de commande hydraulique selon une des revendications n° 3 à 9, **caractérisé en ce que** un frein (13) mécanique, pouvant être purgé par voie hydraulique, est prévu pour le treuil (10) et que le deuxième distributeur (70), dans sa position en mode d'amarrage, peut solliciter le frein (13) avec du fluide de pression.

11. Un dispositif de commande hydraulique selon la revendication n° 8 ou 9 et selon la revendication n° 10, **caractérisé en ce que** les raccords (88, 89) du deuxième distributeur (70), situés dans la conduite (66) en by-pass, sont disposés en aval du clapet (71) anti-retour.

12. Un dispositif de commande hydraulique selon une revendication précédente, **caractérisé par** un dispositif (103) de rappel pour le levier (81) de commande comportant un ressort (149) de rappel, qui est de plus en plus fortement précontraint avec une inclinaison croissante du levier (81) de commande dans la zone angulaire (85) de filage et dans la zone angulaire (86) de halage, cependant qu'une modification de l'inclinaison du levier (81) de commande dans la zone angulaire (87) d'amarrage n'a aucune influence sur la précontrainte du ressort (149) de rappel.

13. Un dispositif de commande hydraulique selon la revendication n° 12, **caractérisé en ce qu'**au levier (81) est relié, de façon à ne pouvoir effectuer aucun mouvement de rotation, un disque (102) de courbe pourvu d'une trajectoire (104) de courbe, contre laquelle un membre (145) de transmission du dispositif (103) de rappel est appuyé par le ressort (149) de rappel, et que la trajectoire (104) de courbe présente un segment (160) de courbe neutre, qui est indifférent par rapport à la position du membre (145) de transmission et contre lequel s'appuie le membre (145) de transmission, lorsque le levier (81) de commande se trouve dans la zone angulaire (87) d'amarrage.

14. Un dispositif de commande hydraulique selon la revendication n° 13, **caractérisé en ce que** le membre (145) de transmission est guidé de façon à pouvoir bouger radialement par rapport à l'axe (82) de rotation du levier (81) de commande et la trajectoire (104) de courbe est disposée au niveau de la périphérie du disque (102) de courbe et que le segment (160) de courbe neutre est constitué d'un arc de cercle ou d'un arc de cylindre circulaire.

15. Un dispositif de commande hydraulique selon la revendication n° 14, **caractérisé en ce que** la distance angulaire entre la zone angulaire (87) d'amarrage et la position neutre du levier (81) de commande est inférieure à 90 degrés et que le membre (145) de transmission présente un évidement (170), qui est délimité par un arc de cercle ou un cylindre (171) circulaire et dans lequel plonge le segment (160) de courbe neutre du disque (102) de courbe au début de la zone angulaire (87) d'amarrage.

16. Un dispositif de commande hydraulique selon la revendication n° 15, **caractérisé en ce que** le membre (145) de transmission est guidé de façon à ne pouvoir effectuer aucun mouvement de rotation.

17. Un dispositif de commande hydraulique selon une des revendications n° 12 à 15, **caractérisé en ce que** dans la zone angulaire (87) d'amarrage, le membre (145) de transmission est appuyé contre le disque (102) de courbe par un deuxième ressort (150), en sus du ressort (149) de rappel.

18. Un dispositif de commande hydraulique selon la revendication n° 17, **caractérisé en ce que** le deuxième ressort (150) est disposé librement dans une chambre de ressort dans la zone angulaire (86) de halage, qu'une distance angulaire est maintenue entre la zone angulaire (86) de halage et la zone angulaire (87) d'amarrage et que dans la zone angulaire entre le halage et l'amarrage, le deuxième ressort (150) est contraint par coulissement du membre (145) de transmission.

19. Un dispositif de commande hydraulique selon la revendication n° 18, **caractérisé en ce qu'**à l'intérieur du ressort (149) de rappel est disposée une douille (153), qui est orientée vers le membre (145) de transmission de par son fond, et que le deuxième ressort (150) est hébergé à l'intérieur de la douille (153).

20. Un dispositif de commande hydraulique selon une des revendications n° 13 à 19, **caractérisé en ce que** l'inclinaison du levier (81) de commande est limitée, à la fin de la zone (85) angulaire de filage et à la fin de la zone (87) angulaire d'amarrage, selon le cas, par une surface (140, 162) de butée au niveau d'une pièce (83, 102), qui est entraînée par le levier (81) de commande, et une contre-butée (84, 173) et que le membre (145) de transmission présente une butée (155), par laquelle, en fonction du type de fixation du membre (145) de transmission et / ou d'une contre-butée, la course du membre (145) de transmission dans le sens d'une précontrainte plus forte du ressort (149) de rappel est limitée, ou non, en fin de zone (86) angulaire de halage.

21. Un dispositif de commande hydraulique selon la revendication n° 20, **caractérisé en ce que** l'évidement (170) en forme d'arc de cercle ou de cylindre circulaire est disposé sur la face (148) du membre (145) de transmission, qui est orientée vers le disque (102) de courbe, de façon asymétrique par rapport à l'axe du membre (145) de transmission, et prend fin dans une surface (173) de butée pour le disque (102) de courbe.

22. Un dispositif de commande hydraulique selon la revendication n° 20 ou 21, **caractérisé en ce que** le membre (145) de transmission est maintenu de façon à ne pouvoir effectuer aucun mouvement de rotation, par une rainure (154) évoluant dans sa direction de guidage et un pivot (156) ou une baguette ayant prise dans cette rainure (154), et qu'une deuxième rainure (155) est prévue, qui de préférence est diamétralement opposée à la première rainure (154) par rapport à l'axe du membre (145) de transmission et qui est plus courte que la première rainure (154).

23. Un dispositif de commande hydraulique selon une des revendications n° 15 à 22, **caractérisé en ce que** l'évidement (170) dans la face (148) orientée vers le disque (102) de courbe du membre (145) de transmission est de forme cylindrique circulaire et présente une rigole (172), qui ouvre un espace libre entre le disque (102) de courbe et le membre (145) de transmission, même lorsque le levier (81) de commande est incliné jusqu'au bout, et qui est disposée dans un cheminement (174, 175) du flux pour le fluide de pression, qui débouche dans la chambre de ressort derrière le membre (145) de transmission.
